# EUROPEAN PATENT SPECIFICATION

(11) **EP 4 344 311 B1**
(45) Date of publication and mention of the grant of the patent: **02.12.2026**
(21) Application number: 22819402.3
(22) Date of filing: 30.05.2022
(51) Int. Cl.: H04W 52/02, H04B 17/318, H04W 16/18, H04W 24/02, H04W 72/115, H04W 24/08, H04W 24/10, H04W 74/0833

(54) **DATA TRANSMISSION METHOD, DEVICE AND STORAGE MEDIUM**
DATENÜBERTRAGUNGSVERFAHREN, VORRICHTUNG UND SPEICHERMEDIUM
PROCÉDÉ DE TRANSMISSION DE DONNÉES, DISPOSITIF ET SUPPORT DE STOCKAGE

(30) Priority: 08.06.2021 CN 202110640603
(43) Date of publication of application: 27.03.2024
(73) Proprietor: Datang Mobile Communications Equipment Co., Ltd., Beijing 100085 (CN)
(72) Inventor: ZHANG, Mingzhu, Beijing 100085 (CN); ZENG, Erlin, Beijing 100085 (CN)
(74) Representative: Studio Torta S.p.A.
(86) International application number: PCT/CN2022/096089
(87) International publication number: WO 2022/257804

(56) References cited:
- CN-A- 111 757 471
- CN-A- 112 262 597
- CN-A- 112 913 315
- CN-B- 108 353 289
- OPPO: "Discussion on RACH based SDT", vol. RAN WG2, no. electronic; 20210125 - 20210205, 15 January 2021 (2021-01-15), XP051973484, Retrieved from the Internet <URL:https://ftp.3gpp.org/tsg_ran/WG2_RL2/TSGR2_113-e/Docs/R2-2100284.zip R2-2100284 - Discussion on RACH based SDT.doc> [retrieved on 20210115]
- ZTE CORPORATION ET AL: "Control plane aspects of SDT", vol. RAN WG2, no. Electronic meeting; 20210412 - 20210420, 1 April 2021 (2021-04-01), XP051992002, Retrieved from the Internet <URL:https://ftp.3gpp.org/tsg_ran/WG2_RL2/TSGR2_113bis-e/Docs/R2-2103019.zip R2-2103019_CpAspects.docx> [retrieved on 20210401]
- HUAWEI, HISILICON: "Small data transmission with RA-based schemes", 3GPP DRAFT; R2-2101214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. E-meeting; 20210125 - 20210205, 15 January 2021 (2021-01-15), Mobile Competence Centre ; 650, route des Lucioles ; F-06921 Sophia-Antipolis Cedex ; France , XP051974181

## Description

### TECHNICAL FIELD

The present disclosure relates to the field of communication technologies and, in particular, to a data transmission methods and apparatuses.

### BACKGROUND

Small data transmission (SDT) refers to a technology that a user equipment (UE), in a radio resource control (RRC) inactive state (RRC_INACTIVE State), transmits a small data packet by using a pre-configured (Configured Grant, CG) resource or a random access (RA) resource.

When a small data packet needs to be sent, the UE selects an SDT mode or a non-SDT mode according to an RSRP (Reference Signal Receiving Power) threshold or/and a data volume threshold configured by a network device. Once the SDT mode is selected, the user equipment in the RRC_INACTIVE state can avoid changing an RRC state, saving signaling overhead. After the SDT mode is selected, if there is no specific indication of which carrier to select, a carrier may be selected according to the RSRP threshold broadcast by the network device. Further, if a CG criterion is met, a CG resource is selected for SDT; if the CG criterion is not met, a two-step random access (2-step RA) process or a four-step random access (4-step RA) process type is selected for SDT according to an RA criterion.

In the related art, selection of a specific transmission mode used in a small data transmission process depends on SDT configuration information configured by the network device. However, due to a possible change in a network environment between a terminal device and the network device, the SDT mode probably cannot be selected, and only the non-SDT mode can be selected, thereby increasing the signaling overhead in the small data transmission process.

A contribution by OPPO, titled "Discussion on RACH based SDT", for the 3GPP TSG RAN WG2 Meeting, no. R2-2100284, discloses a view of the author on RACH based SDT in some aspects, such as RACH resource configuration, selections in RACH based SDT and beam handling during subsequent transmissions.

### SUMMARY

The present disclosure provides a data transmission method, and apparatuses to optimize a data transmission process. The present invention is set out in the appended claims. Embodiments of the present disclosure provide a basis for the network device to optimize the SDT configuration information, enabling the SDT configuration information sent by the network device to the UE to be more reasonable, thereby more reasonably guiding and optimizing a next data transmission process of the UE.

It should be understood that the content described in the SUMMARY section is not intended to limit essential or important features of the embodiments of the present disclosure, nor is it intended to limit the scope of the present disclosure. Other features of the present disclosure will be readily understood from the following description.

### BRIEF DESCRIPTION OF THE DRAWINGS

In order to explain technical solutions in the present disclosure or in the related art more clearly, drawings required to be used in the description of embodiments or the related art will be introduced briefly in the following. It is obvious that the drawings in the following description are some embodiments of the present disclosure. For those skilled in the art, other drawings may also be obtained based on these drawings without creative effort.
FIG. 1 is an application scenario diagram of a data transmission method provided by an embodiment of the present disclosure.
FIG. 2 is a flowchart of a data transmission method provided by an embodiment of the present disclosure.
FIG. 3 is a flowchart of a data transmission method provided by another embodiment of the present disclosure.
FIG. 4 is a flowchart of a data transmission method provided by another embodiment of the present disclosure.
FIG. 5 is a flowchart of a data transmission method provided by another embodiment of the present disclosure.
FIG. 6 is a flowchart of a data transmission method provided by another embodiment of the present disclosure.
FIG. 7 is a structural diagram of a terminal device provided by an embodiment of the present disclosure.
FIG. 8 is a structural diagram of a network device provided by an embodiment of the present disclosure.
FIG. 9 is a structural diagram of a data transmission apparatus provided by an embodiment of the present disclosure.
FIG. 10 is a structural diagram of a data transmission apparatus provided by another embodiment of the present disclosure.

### DESCRIPTION OF EMBODIMENTS

In the present disclosure, the term "and/or" describes an association relationship of associated objects, and means that there may be three relationships. For example, "A and/or B" may represent three situations, namely, A exists alone, A and B exist at the same time, and B exists alone. The character "/" generally means that the associated objects before and after the character is of an "or" relationship.

The term "multiple" in embodiments of the present disclosure refers to two or more than two, and other quantifiers are similar to it.

A UE is in a radio resource control RRC inactive state (RRC_INACTIVE), and when a small data packet needs to be sent, if the UE enters an RRC_CONNECTED state to send the small data packet, a signaling overhead will be increased. Therefore, for the small data packet, in order to avoid increasing the signaling overhead, the UE may not enter the RRC_CONNECTED state to send the small data packet, but send the small data packet through a preconfigured resource (CG resource) or a random access resource (RA resource). That is, a small data transmission SDT means that the UE uses the CG resource or the RA resource to transmit the small data packet when the UE is in the RRC_INACTIVE state.

Specifically, for first transmission data, the UE selects a SDT or non-SDT process according to an RSRP threshold or/and a data volume threshold configured by a network device. After the SDT process is selected, if there is no specific indication of which carrier to select, a carrier can be selected according to the RSRP threshold broadcast by the network device. Further, if a CG criterion is met, a CG resource is selected for SDT, where a SSB and/or a TA timer with a valid TA (Timing Advance,) is selected according to an RSRP threshold of a CG-associated SSB; if the CG criterion is not met, a 2-step RA or a 4-step RA type is selected for SDT according to an RA criterion.

In the related art, selection of a specific transmission mode used in the above small data transmission process depends on SDT configuration information configured by the network device, but a network environment between a terminal device and the network device may change. For example, a network signal quality, a CG resource and an RA resource state between the terminal device and the network device may change, resulting in that when a target transmission mode is selected according to the SDT configuration information configured by the network device, a SDT mode probably cannot be selected, and only a non-SDT mode can be selected, and at this time, an RRC state may need to be changed, which increases the signaling overhead in the small data transmission process. In another case, the SDT mode may be selected during selecting the target transmission mode according to the SDT configuration information configured by the network device, but at this time, the network environment such as the signal quality, the CG resource and the RA resource state may no longer be applicable to the SDT mode, resulting in data not being transmitted smoothly.

Therefore, due to a basis on the SDT configuration information configured by network device, there are problems that the determined transmission mode is unreasonable, and the UE cannot be reasonably guided to adopt an appropriate data transmission mode for data transmission, resulting in an energy consumption or a low data transmission efficiency.

In order to solve the above technical problems, in the embodiments of the present disclosure, for first transmission data, a target transmission mode of the first transmission data is determined according to SDT configuration information, where the SDT configuration information is configured by a network device; relevant information generated in a process of determining the target transmission mode for the first transmission data is sent to the network device, where the relevant information is used to optimize the SDT configuration information, so that the network device can dynamically optimize the SDT configuration information according to the relevant information, thereby more reasonably configuring and optimizing a small data transmission process, and enabling an UE to determine a reasonable transmission mode based on optimized SDT configuration information.

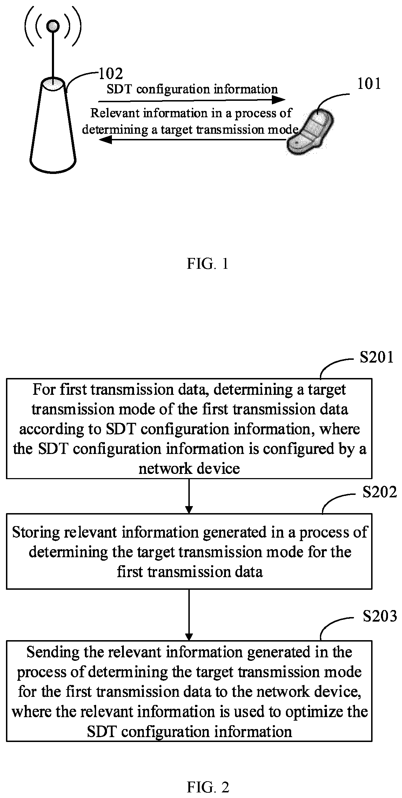

An embodiment of the present disclosure is applied to an application scenario shown in FIG. 1, and the application scenario includes a terminal device 101 and a network device 102. The network device 102 may send small data transmission SDT configuration to the terminal device 101, and when there exists first transmission data for the terminal device 101, the terminal device 101 may determine a target transmission mode of the first transmission data according to the SDT configuration information. The terminal device 101 may store relevant information generated in a process of determining the target transmission mode for the first transmission data, and may also send the relevant information to the network device 102 after obtaining the relevant information, so that the network device 102 optimizes the SDT configuration information according to the relevant information.

The terminal device involved in the embodiments of the present disclosure may refer to a device that provides voice and/or data connectivity to a user, a handheld device with a wireless connection function, or other processing devices connected to a wireless modem, etc. The name of the terminal device may be different in different systems. For example, in the 5G system, the terminal device may be called a user equipment (UE). A wireless terminal device may communicate with a core network (CN) via a radio access network (RAN). The wireless terminal device may be a mobile terminal device, such as a mobile phone (or a "cellular" phone) and a computer with a mobile terminal device. For example, the mobile terminal device may be a portable, pocket-sized, handheld, computer-built or vehicle-mounted mobile apparatus, which exchange language and/or data with a radio access network, such as a personal communication service (PCS) phone, a cordless phone, a session initiated protocol (SIP) phone, a wireless local loop (WLL) station, a personal digital assistant (PDA) and other devices. The wireless terminal device may also be called a system, a subscriber unit, a subscriber station, a mobile station, a mobile, a remote station, an access point, a remote terminal, an access terminal, a user terminal, a user agent, a user device, which is not limited in the embodiments of the present disclosure.

The network device involved in the embodiments of the present disclosure may be a base station, and the base station may include multiple cells providing services for a terminal device. Depending on a specific application, the base station may also be called an access point, or a device in an access network that communicates with a wireless terminal device through one or more sectors on an air interface, or other names. The network device may be configured to exchange a received over-the-air frame with an Internet protocol (IP) packet, and act as a router between the wireless terminal device and the rest of the access network, where the rest of the access network may include an Internet protocol (IP) communication network. The network device may also coordinate a property management of the air interface. For example, the network device involved in the embodiments of the present disclosure may be a network device (Base Transceiver Station, BTS) in a global system for mobile communications (GSM) or code division multiple access (CDMA); may also be a network device (NodeB) in a wide-band code division multiple access (WCDMA); may also be an evolutional network device (evolutional Node B, eNB or e-NodeB) in a long term evolution (LTE) system, a 5G base station (gNB) in a 5G network architecture (next generation system); and may also be a home evolved base station (Home evolved Node B, HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and distributed unit may also be geographically separated.

The technical solutions in embodiments of the present disclosure will be described clearly and comprehensively in combination with accompanying drawings in the embodiments of the present disclosure. Obviously, the described embodiments are only part of the embodiments of the present disclosure, not all of them. Based on the embodiments of the present application, all other embodiments obtained by those skilled in the art without creative effort belong to the protection scope of the present disclosure.

The embodiments of the present disclosure provide a data transmission method, a device, a storage medium and a program product, where the method and the device, the storage medium and the program product are based on a same application concept. Since principles for solving problems are similar, the embodiments thereof can be referred to each other, and the repetition is not made herein.

### Embodiment 1

FIG. 2 is a flowchart of a data transmission method provided by the present embodiment. As shown in FIG. 2, the present embodiment provides a data transmission method, with an executive entity being a user equipment UE, and specific steps of the data transmission method are as follows.

S201: for first transmission data, determining a target transmission mode of the first transmission data according to SDT configuration information, where the SDT configuration information is configured by a network device.

In the present embodiment, the first transmission data may be called to-be-transmitted data, that is, before transmitting the first transmission data, a transmission mode of the first transmission data is determined according to the SDT configuration information.

The network device may send the SDT configuration information to the terminal device, where the SDT configuration information may include a configuration parameter that guides the UE to perform a data transmission process, including but not limited to various preset thresholds involved in the UE determining the target transmission mode, such as one or more of a preset signal quality threshold of each stage, a timing advance timer TAT duration threshold, a preset number threshold corresponding to the number of SDT, an instruction for specifying the target transmission mode, an instruction for converting a transmission mode, and so on.

In the present embodiment, if the UE is currently in an RRC_INACTIVE state, the target transmission mode of the first transmission data can be determined according to the SDT configuration information, where the target transmission mode may include but not limited to a non-SDT mode and an SDT mode, where the SDT mode may include but not limited to an SDT mode based on a preconfigured resource or an SDT mode based on an RA resource, and the non-SDT mode may include but not limited to performing an RRC Resume process.

Optionally, for determining the target transmission mode of the first transmission data according to the SDT configuration information, the method may specifically include the following steps.
1) Determining whether to select the SDT mode.

Optionally, determination can be made as to whether a data volume of the first transmission data is less than a preset data volume threshold, and/or whether a first measured value of a signal quality of a reference signal is not less than a first preset signal quality threshold X1.

If the data volume of the first transmission data is greater than the preset data volume threshold, and/or the first measured value of the signal quality of the reference signal is less than the first preset signal quality threshold X1, the target transmission mode may be determined to be the non-SDT mode, and then the first transmission data is transmitted to the network device in the non-SDT mode.

If the data volume of the first transmission data is not greater than the preset data volume threshold, and/or the first measured value of the signal quality of the reference signal is not less than the corresponding first preset signal quality threshold X1, it can be preliminarily determined that the SDT mode is required, and specifically whether a SDT mode based on the preconfigured resource or the SDT mode based on the RA resource is adopted needs to be determined subsequently.

2) If no uplink carrier is specified, an UL (Up Link, uplink) carrier is selected according to a second measured value of the signal quality of the reference signal and a corresponding first preset signal quality threshold X2. Optionally, if the second measured value of the signal quality of the reference signal is less than the first preset signal quality threshold X2, a supplementary uplink SUL carrier is selected. It should be noted that the first preset signal quality threshold X1 corresponding to the reference signal measured for determining whether to select the SDT mode may be different from or identical to the first preset signal quality threshold X2 corresponding to the reference signal measured for selecting the uplink UL carrier. In addition, for the SDT mode and the non-SDT mode, the first preset signal quality threshold for selecting the uplink UL carrier may be different.

3) If it is preliminarily determined that the SDT mode needs to be adopted, it is necessary to determine whether a preconfigured resource usage rule is met. If the preconfigured resource usage rule is met, the target transmission mode is determined to be the SDT mode based on the preconfigured resource (CG-SDT). Optionally, determining whether the preconfigured resource usage rule is met includes: determining whether a second measured value of a signal quality of a synchronization signal block SSB associated with the preconfigured resource exceeds a second preset signal quality threshold, and/or determining whether the preconfigured resource is valid, and/or determining whether TAT (Timing Advance Timer) not times out, if it is determined that the second measured value of the signal quality of the synchronization signal block SSB associated with the preconfigured resource exceeds the second preset signal quality threshold, and/or the preconfigured resource is valid, and/or the TAT does not time out, it is determined that the preconfigured resource usage rule is met, and the target transmission mode may be determined to be the SDT mode based on the preconfigured resource, and then the first transmission data is transmitted to the network device in the SDT mode based on the preconfigured resource.

4) If it is determined that the preconfigured resource usage rule is not met, an random access RA resource may be selected, and the target transmission mode is determined to be the SDT mode based on the RA resource (RA-SDT), and then the first transmission data is transmitted to the network device in the SDT mode based on RA resource.

5) If a transmission of the first transmission data fails when a SDT is performed with the preconfigured resource, or the transmission of the first transmission data fails when the SDT is performed with the RA resource, the target transmission mode is determined to be the non-SDT mode, and then the first transmission data is transmitted to the network device in the non-SDT mode.

If a cumulative number of SDT exceeds a preset number threshold, the target transmission mode is also determined to be the non-SDT mode, and then the first transmission data is transmitted to the network device in the non-SDT mode.

Of course, if the UE is not in the RRC_INACTIVE state, the target transmission mode of the first transmission data may also be determined according to the SDT configuration information based on the above process, that is, the UE may not be limited to be in the RRC_INACTIVE state in the present embodiment.

A measured value of any signal quality or a signal quality of any signal quality threshold described above includes but is not limited to any of the following: RSRP (Reference Signal Receiving Power), RSRQ (Reference Signal Receiving Quality), or SINR (Signal to Interference Plus Noise Ratio).

S202: storing relevant information generated in a process of determining the target transmission mode for the first transmission data.

In the present embodiment, in the above-mentioned process of determining the target transmission mode, the relevant information generated in the process of determining the target transmission mode may be stored, and this step is an optional step.

Specifically, the relevant information includes at least one of the following:
information related to a data volume of the first transmission data;
information related to a signal quality of a measured reference signal;
information related to the determined target transmission mode.

Optionally, the information related to the data volume of the first transmission data includes: at least one or more of the data volume of the first transmission data, a preset data volume threshold, and a comparison result between the data volume of the first transmission data and the preset data volume threshold.

Optionally, the information related to the signal quality of the measured reference signal includes: at least one or more of a measured value of the signal quality of the measured reference signal, a first preset signal quality threshold, and a comparison result between the measured value and the first preset signal quality threshold.

Further, the signal quality of the reference signal is obtained by measurement for determining whether to select an SDT mode, or the signal quality of the reference signal is obtained by measurement for selecting an uplink UL carrier; where a first preset signal quality threshold X1 corresponding to the reference signal measured for determining whether to select the SDT mode is different from or identical to a first preset signal quality threshold X2 corresponding to the reference signal measured for selecting the uplink UL carrier.

In an optional embodiment, if the determined target transmission mode is an SDT mode, the information related to the determined target transmission mode includes at least one or more of the following:
timing advance timer TAT information;
indication information of whether a valid preconfigured resource exists;
information related to a signal quality of a synchronization signal block SSB associated with a preconfigured resource;
a transmission type for the SDT mode adopted, where the transmission type includes one of an SDT mode based on a preconfigured resource and an SDT mode based on a random access RA resource;
a cumulative number of SDT.

It should be note that that TAT information includes at least one or more of a TA duration and whether timeout occurs, and may also include other information related to TAT, which is not specifically limited here.

In another optional embodiment, if the determined target transmission mode is a non-SDT mode, the information related to the determined target transmission mode includes:
a reason for adopting the non-SDT mode.

Optionally, the reason for adopting the non-SDT mode includes at least one or more of the following:
the data volume of the first transmission data is greater than a preset data volume threshold;
a measured value of the signal quality of the reference signal is less than a first preset signal quality threshold;
a measured value of a signal quality of a synchronization signal block SSB associated with a preconfigured resource is less than a second preset signal quality threshold;
information on transmission failure for transmitting the first transmission data using an SDT mode;
a cumulative number of SDT exceeds a preset transmission number threshold;
a transmission mode conversion instruction is received, where the transmission mode conversion instruction is used to indicate a conversion to the non-SDT mode.

It should be noted that the signal quality of the reference signal may be obtained by measurement for determining whether to select the SDT mode, or the signal quality of the reference signal may be obtained by measurement for selecting the uplink UL carrier, or may be obtained by measurement for performing other operations, which is not specifically limited here.

Optionally, for storing the relevant information generated in the process of determining the target transmission mode for the first transmission data, for the first transmission data at different moments, the relevant information corresponding to the target transmission mode determined for the first transmission data is stored respectively, where the relevant information is the relevant information generated in the process of determining the target transmission mode for the first transmission data. That is, in the present embodiment, if there are multiple first transmission data, for different first transmission data, a target transmission mode is determined for each first transmission data, and relevant information corresponding to the target transmission mode determined for each first transmission data is stored. In a case that the relevant information corresponding to the target transmission mode determined for each first transmission data is obtained, a relevant information set is stored, and the relevant information set includes the relevant information corresponding to the target transmission mode determined for each first transmission data.

For example, for determining the target transmission mode for different first transmission data, the relevant information corresponding to the target transmission mode determined for the first transmission data may be stored separately. For example, storage data of one entry may correspond to relevant information corresponding to one first transmission data, and storage data of multiple entries may correspond to relevant information corresponding to multiple first transmission data respectively, so as to ensure that subsequently generated storage record data will not overwrite previously generated storage data.

Optionally, in the present embodiment, a type of signal quality in the first measured value of the signal quality of the reference signal, the second measured value of the signal quality of the reference signal and the measured value of the signal quality of the synchronization signal block SSB associated with the preconfigured resource may be the same or different, and may be any one of RSRP, RSRQ and SINR.

S203: sending the relevant information generated in the process of determining the target transmission mode for the first transmission data to the network device, where the relevant information is used to optimize the SDT configuration information.

In the present embodiment, after obtaining the relevant information generated in the process of determining the target transmission mode for the first transmission data, the UE may send the relevant information to the network device, and the network device may optimize the SDT configuration information based on such relevant information. A specific optimization mode is not limited in the present embodiment. In addition, a manner in which the UE sends the relevant information to the network device is not limited in the present embodiment. For example, the UE may directly send the relevant information to the network device, or may send the relevant information to the network device according to preconfigured reporting information, or may send the relevant information to the network device after receiving a request from the network device, or may generate an information report according to the relevant information, and then send the information report to the network device, or may write the relevant information into a report such as an RA report and a logged MDT measurement report, and then send the report to the network device, or may send the relevant information to the network device through a dedicated signaling, which will not be exemplified here.

In the data transmission method provided by the present embodiment, for the first transmission data, the target transmission mode of the first transmission data is determined according to the SDT configuration information, where the SDT configuration information is configured by the network device; the relevant information generated in the process of determining the target transmission mode for first transmission data is sent to network device, where the relevant information is used to optimize the SDT configuration information. The present embodiment provides a basis for the network device to optimize the SDT configuration information, enabling the SDT configuration information sent by the network device to the UE to be more reasonable, thereby more reasonably guiding and optimizing a next data transmission process of the UE.

### Embodiment 2

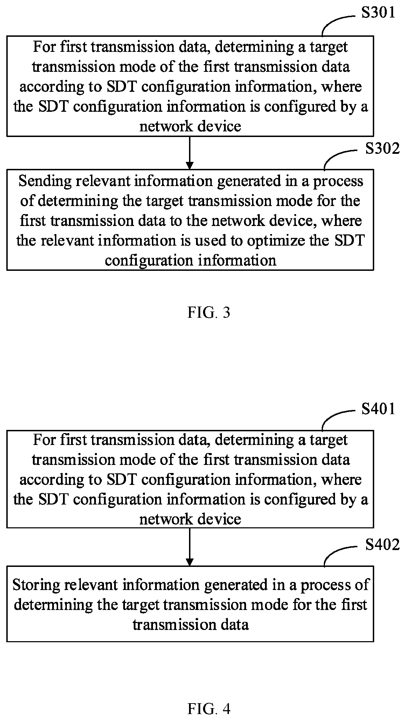

FIG. 3 is a flowchart of a data transmission method provided by the present embodiment. As shown in FIG. 3, the present embodiment provides a data transmission method, with an executive entity being a UE, and specific steps of the data transmission method are as follows.

S301: for first transmission data, determining a target transmission mode of the first transmission data according to SDT configuration information, where the SDT configuration information is configured by a network device.

S302: sending relevant information generated in a process of determining the target transmission mode for the first transmission data to the network device, where the relevant information is used to optimize the SDT configuration information.

Reference for the data transmission method provided by the present embodiment can be made to the above embodiment. In the present embodiment, after obtaining the relevant information generated in the process of determining the target transmission mode for the first transmission data, the UE sends the relevant information to the network device, and the relevant information is used to optimize the SDT configuration information.

### Embodiment 3

FIG. 4 is a flowchart of a data transmission method provided by the present embodiment. As shown in FIG. 4, the present embodiment provides a data transmission method, with an executive entity being a UE, and specific steps of the data transmission method are as follows.

S401: for first transmission data, determining a target transmission mode of the first transmission data according to SDT configuration information, where the SDT configuration information is configured by a network device.

S402: storing relevant information generated in a process of determining the target transmission mode for the first transmission data.

Reference for the data transmission method provided by the present embodiment can be made to the above embodiments. In the present embodiment, whether the UE sends the stored relevant information generated in the process of determining the target transmission mode for the first transmission data to the network device may not be concerned. For example, in some cases, some network devices do not support optimizing the SDT configuration information according to such relevant information, the UE may not send the relevant information to such network devices. Or, in some cases, the UE may not send all the stored relevant information to the network device, but send part of the stored relevant information to the network device. Whether the terminal device sends all or part of the stored relevant information to the network device may be based on a negotiation or agreement between the network device and the terminal device, and the implementation mode thereof is not specifically limited here.

### Embodiment 4

As an optional manner, sending the relevant information to the network device as described in S203 in the above embodiment may specifically include:
generating an information report according to the relevant information generated in the process of determining the target transmission mode for the first transmission data, and sending the information report to the network device.

In the present embodiment, after the relevant information generated in the process of determining the target transmission mode for the first transmission data is obtained, the information report may be generated according to the relevant information, where the information report is a report for storing the relevant information, such as an SDT report, and then the newly generated information report may be sent to the network device.

### Embodiment 5

As an implementation, sending the relevant information to the network device as described in S203 in the above embodiment may specifically include:
writing the relevant information into a first report; or, in a case of obtaining the relevant information, generating identification information of the relevant information, and writing the identification information into a first report, where the identification information is used to obtain the relevant information corresponding to the identification information;
sending the first report to the network device;
where the first report includes one or more of an RA report, a logged MDT measurement report, a CEF report and an RLF report.

In the present embodiment, the relevant information generated in the process of determining the target transmission mode for the first transmission data can be written into the first report. Optionally, the first report includes but is not limited to at least one of the following: an RA report, a logged MDT measurement report (a report recording a MDT measurement value, MDT refers to minimization of drive tests), a CEF (Connection Establishment Failure) report and a RLF (Radio Link Failure) report. It should be noted that if the first report exists in the UE at a current moment, the relevant information generated in the process of determining the target transmission mode for the first transmission data is directly written into the first report. If the first report does not exist in the UE at the current moment, the first report is created, and the relevant information generated in the process of determining the target transmission mode for the first transmission data is directly written into the first report, and there is no limitation as to whether the first report includes other measurement data that should have been written into the first report.

In addition, optionally, since the relevant information generated in the process of determining the target transmission mode for the first transmission data is written into the first report, the first report has changed. In order to enable the network device to extract the relevant information after receiving the first report, or to distinguish the relevant information from preset content of the first report, the identification information of the relevant information may be written into the first report. Optionally, the identification information may be 1-bit indication information, and the preset content may be other measurement data, and of course, the other measurement data in the first report may also be null.

### Embodiment 6

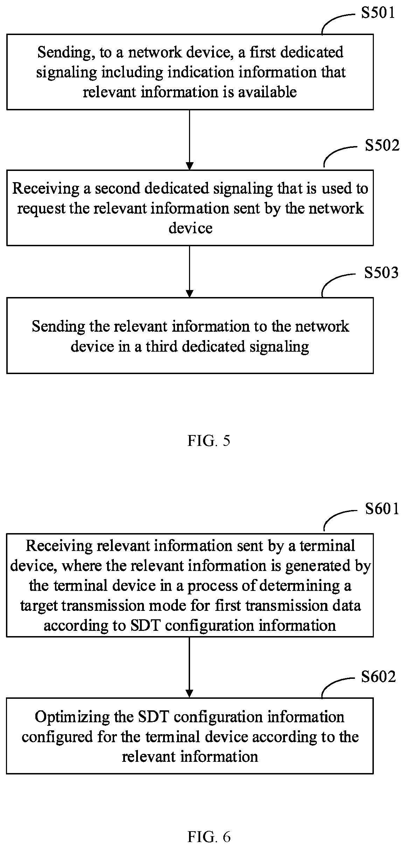

As shown in FIG. 5, as an optional manner, sending the relevant information to the network device as described in S203 in the above embodiment may specifically include the following steps.

S501: sending, to the network device, a first dedicated signaling including indication information that the relevant information is available.

S502: receiving a second dedicated signaling that is used to request the relevant information sent by the network device.

S503: sending the relevant information to the network device in a third dedicated signaling.

In the present embodiment, considering that some network devices may be currently busy, or do not support optimizing the SDT configuration information according to the relevant information generated in the process of determining the target transmission mode for the first transmission data, the UE may first send, to the network device, the first dedicated signaling including the indication information that the relevant information is available, where the first dedicated information is used to notify the network device that the relevant information has been stored, is in an available state, and can be provided to the network device. After receiving the first dedicated signaling, the network device may determine whether to send the second dedicated signaling that is used to request the relevant information to the UE according to its own situation. If the UE receives the second dedicated signaling, the UE may send the relevant information to the network device in the third dedicated signaling.

In another optional embodiment, the network device may preconfigure reporting information for the terminal device, and the terminal device may send the relevant information corresponding to the reporting information to the network device according to preconfigured reporting information.

In another optional embodiment, the terminal device may receive a request message sent by the network device, and send the relevant information to the network device according to the request message.

In order to more clearly describe the data transmission method provided by the above embodiments, the following is an exemplary description.

### Example 1

1) A UE receives SDT configuration information sent by a network device in an RRC Release message.
2) The UE enters an RRC_INACTIVE state, and when a first transmission data packet needs to be sent, the UE records a data volume and a first measured value (a value of RSRP, RSRQ, or SINR) of a signal quality of a reference signal at this time, compares them with a data volume threshold and a first preset signal quality threshold X1 (a threshold of RSRP, RSRQ, or SINR) configured by the network device in the SDT configuration information respectively and records relevant information which may include at least one of the first measured value of the signal quality of the reference signal, a comparison result between the first measured value and the first preset signal quality threshold X1, or the first preset signal quality threshold X1. The relevant information may also include at least one of a data volume of first transmission data, a preset data volume threshold, or a comparison result between the data volume of first transmission data and the preset data volume threshold.
3) When the data volume is less than the preset data volume threshold, and/or the first measured value of the signal quality of the reference signal is greater than the first preset signal quality threshold X1, a selection of an SDT process is preliminarily determined.
4) The UE selects a UL carrier, and records a second measured value (such as a value of RSRP, RSRQ, or SINR) of a signal quality in a process of selecting the UL carrier, and compares it with a first preset signal quality threshold X2 (a threshold of RSRP, RSRQ or SINR) configured by the network device in the SDT configuration information, and records relevant information which may include the second measured value of the signal quality of the reference signal, a comparison result between the second measured value and the first preset signal quality threshold X2, and the first preset signal quality threshold X2.
5) After selecting the UL carrier, the UE determines whether a CG criterion is met, measures a measured value (a value of RSRP, RSRQ, or SINR) of a signal quality of a SSB associated with a CG resource, and determines a TA timer duration. At this time, the UE records the measured value of the signal quality of the SSB and the TA timer duration, and compares the measured value with a second preset signal quality threshold (a threshold of RSRP, RSRQ, or SINR) configured by the network device in the SDT configuration information, determines whether the TA timer times out, and records relevant information which may include at least one of the following: a timing advance timer TAT duration, and/or whether TAT times out; at least one of the measured value of the synchronization signal block SSB associated with the preconfigured resource, the second preset signal quality threshold, or a comparison result between the measured value of the signal quality of the SSB and the second preset signal quality threshold; indication information of whether a valid preconfigured resource exists.
6) When determining that the CG criterion is met, the UE uses the CG resource to send the small data packet and records the number of SDT.
7) Save the above relevant information in an information report, such as an SDT report, and send it to the network device.

### Example 2

1) A UE receives SDT configuration information sent by a network device in an RRC Release message.
2) The UE enters an RRC_INACTIVE state, and when a first transmission data packet needs to be sent, the UE records a data volume and a first measured value (a value of RSRP, RSRQ, or SINR) of a signal quality of a reference signal at this time, compares them with a data volume threshold and a first preset signal quality threshold X1 (a threshold of RSRP, RSRQ, or SINR) configured by the network device in the SDT configuration information respectively and records relevant information which may include at least one of the first measured value of the signal quality of the reference signal, a comparison result between the first measured value and the first preset signal quality threshold X1, or the first preset signal quality threshold X1. The relevant information may also include at least one of a data volume of first transmission data, a preset data volume threshold, or a comparison result between the data volume of first transmission data and the preset data volume threshold.
3) When the data volume is greater than the preset data volume threshold, and the first measured value is greater than the first preset signal quality threshold X1, a non-SDT process is selected, and a reason why the non-SDT is selected is recorded to be that the data volume is greater than the preset data volume threshold.
4) Save the above relevant information in an information report, such as an SDT report, and send it to the network device.

### Example 3

1) A UE receives SDT configuration information sent by a network device in an RRC Release message.
2) The UE enters an RRC_INACTIVE state, and when a first transmission data packet needs to be sent, the UE records a data volume and a first measured value (a value of RSRP, RSRQ, or SINR) of a signal quality of a reference signal at this time, compares them with a data volume threshold and a first preset signal quality threshold X1 (a threshold of RSRP, RSRQ, or SINR) configured by the network device in the SDT configuration information respectively and records relevant information which may include at least one of the first measured value of the signal quality of the reference signal, a comparison result between the first measured value and the first preset signal quality threshold X1, or the first preset signal quality threshold X1. The relevant information may also include at least one of a data volume of first transmission data, a preset data volume threshold, or a comparison result between the data volume of first transmission data and the preset data volume threshold.
3) When the data volume is less than the preset data volume threshold, and/or the first measured value is greater than the first preset signal quality threshold, a selection of an SDT process is preliminarily determined.
4) The UE selects a UL carrier, and records a second measured value (such as a value of RSRP, RSRQ, or SINR) of a signal quality in a process of selecting the UL carrier, and compares it with a first preset signal quality threshold X2 (a threshold of RSRP, RSRQ or SINR) configured by the network device in the SDT configuration information, and records relevant information which may include the second measured value of the signal quality of the reference signal, a comparison result between the second measured value and the first preset signal quality threshold X2, and the first preset signal quality threshold X2.
5) The UE determines whether a CG criterion is met, measures a measured value (a value of RSRP, RSRQ, or SINR) of a signal quality of a SSB associated with a CG resource, and determines a TA timer duration. At this time, the UE records the measured value of the signal quality of the SSB and the TA timer duration, and compares the measured value with a second preset signal quality threshold (a threshold of RSRP, RSRQ, or SINR) configured by the network device in the SDT configuration information, determines whether the TA timer times out, and records relevant information which may include at least one of the following: the timing advance timer TAT duration, and/or whether the TAT times out; at least one of the measured value of the signal quality of the synchronization signal block SSB associated with the preconfigured resource, the second preset signal quality threshold, or a comparison result between the measured value of the signal quality value of the SSB and the second preset signal quality threshold; indication information of whether a valid preconfigured resource exists.
6) When determining that CG criterion is not met, the UE selects an RA resource to send the small data packets according to an RA criterion, and records the number of SDT.
7) After performing random access subsequently to access a network, the UE will record relevant information of an RA process and save an RA report at the same time, then the relevant information of SDT recorded above may be saved in the RA report, and identification information is added in the RA report to distinguish the relevant information from original content of the RA report.

### Example 4

1) A UE receives SDT configuration information and logged MDT measurement configuration sent by a network device in an RRC Release message.
2) The UE enters an RRC_INACTIVE state, and when a first transmission data packet needs to be sent, the UE records a data volume and a first measured value (a value of RSRP, RSRQ, or SINR) of a signal quality of a reference signal at this time, compares them with a data volume threshold and a first preset signal quality threshold X1 (a threshold of RSRP, RSRQ, or SINR) configured by the network device in the SDT configuration information respectively and records relevant information which may include at least one of the first measured value of the signal quality of the reference signal, a comparison result between the first measured value and the first preset signal quality threshold X1, or the first preset signal quality threshold X1. The relevant information may also include at least one of a data volume of first transmission data, a preset data volume threshold, or a comparison result between the data volume of first transmission data and the preset data volume threshold.
3) When the data volume is less than the preset data volume threshold, and/or the first measured value is greater than the first preset signal quality threshold X1, a selection of an SDT process is preliminarily determined.
4) The UE selects a UL carrier, and records a second measured value (such as a value of RSRP, RSRQ, or SINR) of a signal quality in a process of selecting the UL carrier, and compares it with a first preset signal quality threshold X2 (a threshold of RSRP, RSRQ or SINR) configured by the network device in the SDT configuration information, and records relevant information which may include at least one of the second measured value of the signal quality of the reference signal, a comparison result between the second measured value and the first preset signal quality threshold X2, or the first preset signal quality threshold X2.
5) The UE determines whether a CG criterion is met, measures a measured value (a value of RSRP, RSRQ, or SINR) of a signal quality of a SSB associated with a CG resource, and determines a TA timer duration. At this time, the UE records the measured value of the signal quality of the SSB and the TA timer duration, and compares the measured value with a second preset signal quality threshold (a threshold of RSRP, RSRQ, or SINR) configured by the network device in the SDT configuration information, determines whether the TA timer times out, and records relevant information which may include at least one of the following: a timing advance timer TAT duration, and/or whether TAT times out; at least one of the measured value of the signal quality of the synchronization signal block SSB associated with the preconfigured resource, the second preset signal quality threshold, or a comparison result between the measured value of the signal quality of the SSB and the second preset signal quality threshold; indication information of whether a valid preconfigured resource exists.
6) When determining that the CG criterion is met, the UE uses the CG resource to send the small data packet.
7) UE simultaneously performs a logged MDT measurement and records a logged MDT measurement result.
8) After the UE accesses a network subsequently, the relevant information may be reported together with a logged MDT measurement report, and identification information is added in the logged MDT measurement report to distinguish the relevant information from original content of the logged MDT measurement report.

### Example 5

1) A UE receives SDT configuration information and/or logged MDT measurement configuration sent by a network device in an RRC Release message.
2) The UE enters an RRC_INACTIVE state, and when a first transmission data packet needs to be sent, the UE records a data volume and a first measured value (a value of RSRP, RSRQ, or SINR) of a signal quality of a reference signal at this time, compares them with a data volume threshold and a first preset signal quality threshold X1 (a threshold of RSRP, RSRQ, or SINR) configured by the network device in the SDT configuration information respectively and records relevant information which may include at least one of the first measured value of the signal quality of the reference signal, a comparison result between the first measured value and the first preset signal quality threshold X1, or the first preset signal quality threshold X1. The relevant information may also include at least one of a data volume of first transmission data, a preset data volume threshold, or a comparison result between the data volume of first transmission data and the preset data volume threshold.
3) When the data volume is less than the preset data volume threshold, and/or the first measured value is greater than the first preset signal quality threshold X1, a selection of an SDT process is preliminarily determined.
4) The UE selects a UL carrier, and records a second measured value (such as a value of RSRP, RSRQ, or SINR) of a signal quality in a process of selecting the UL carrier, and compares it with a first preset signal quality threshold X2 (a threshold of RSRP, RSRQ or SINR) configured by the network device in the SDT configuration information, and records relevant information which may include at least one of the second measured value of the signal quality of the reference signal, a comparison result between the second measured value and the first preset signal quality threshold X2, or the first preset signal quality threshold X2.
5) The UE determines whether a CG criterion is met, measures a measured value (a value of RSRP, RSRQ, or SINR) of a signal quality of a SSB associated with a CG resource, and determines a TA timer duration. At this time, the UE records the measured value of the signal quality of the SSB and the TA timer duration, and compares the measured value with a second preset signal quality threshold (a threshold of RSRP, RSRQ, or SINR) configured by the network device in the SDT configuration information, determines whether the TA timer times out, and records relevant information which may include at least one of the following: the timing advance timer TAT duration, and/or whether TAT times out; at least one of the measured value of the signal quality of the synchronization signal block SSB associated with the preconfigured resource, the second preset signal quality threshold, or a comparison result between the measured value of the signal quality of the SSB and the second preset signal quality threshold; indication information of whether a valid preconfigured resource exists.
6) If determining that the CG criterion is not met, the UE selects an RA process to send the small data packet.
7) If the UE fails to send the small data packet through an RA resource, for example, a cumulative number of SDT exceeds a configured threshold, the UE sends the small data packet through a non-SDT process, and record a reason for performing the non-SDT process.
8) The above relevant information is saved in an SDT report and sent to the network device.

### Example 6

1) A UE may report, in a first dedicated signaling (for example, RRC Setup Complete/RRC Reconfiguration Complete/RRC Reestablishment Complete/RRC Resume Complete), indication information that relevant information generated in a process of determining a target transmission mode for first transmission data is available.
2) A network device requests the UE, in a second dedicated signaling (such as RRC Reconfiguration/UE Information Request), to report the relevant information generated in the process of determining the target transmission mode for the first transmission data.
3) The UE subsequently reports recorded relevant information generated in the process of determining the target transmission mode for the first transmission data in a third dedicated signaling (such as UE Information Response).

### Embodiment 7

FIG. 6 is a flowchart of a data transmission method provided by the present embodiment. As shown in FIG. 6, the present embodiment provides a data transmission method, with an executive entity being a network device, and specific steps of the data transmission method are as follows.

S601: receiving relevant information sent by a terminal device, where the relevant information is generated by the terminal device in a process of determining a target transmission mode for first transmission data according to SDT configuration information.

S602: optimizing the SDT configuration information configured for the terminal device according to the relevant information.

Optionally, the network device may also send the SDT configuration information to the terminal device before receiving the relevant information sent by the terminal device, or may preconfigure the SDT configuration information for the terminal device, and a specific form is not limited here.

The relevant information includes at least one or more of the following:
information related to a data volume of the first transmission data;
information related to a signal quality of a measured reference signal;
information related to the determined target transmission mode.

Optionally, if the determined target transmission mode is an SDT mode, the information related to the determined target transmission mode includes at least one or more of the following:
timing advance timer TAT information, where the TAT information includes at least one of a TA duration or whether timeout occurs;
indication information of whether a valid preconfigured resource exists;
information related to a signal quality of a synchronization signal block SSB associated with a preconfigured resource;
a transmission type for the SDT mode adopted, where the transmission type includes one of an SDT mode based on a preconfigured resource and an SDT mode based on a RA resource;
a cumulative number of SDT.

Optionally, if the determined target transmission mode is a non-SDT mode, the information related to the determined target transmission mode includes:
a reason for adopting the non-SDT mode.

Optionally, the reason for adopting the non-SDT mode includes at least one or more of the following:
the data volume of the first transmission data is greater than a preset data volume threshold;
a measured value of the signal quality of the reference signal is less than a first preset signal quality threshold;
a measured value of a signal quality of a synchronization signal block SSB associated with a preconfigured resource is less than a second preset signal quality threshold;
information on transmission failure for transmitting the first transmission data using an SDT mode;
a cumulative number of SDT exceeds a preset transmission number threshold;
a transmission mode conversion instruction is received, where the transmission mode conversion instruction is used to indicate a conversion to the non-SDT mode.

Optionally, the information related to the data volume of the first transmission data includes:
at least one or more of the data volume of the first transmission data, a preset data volume threshold, and a comparison result between the data volume of the first transmission data and the preset data volume threshold.

Optionally, the information related to the signal quality of the measured reference signal includes:
at least one or more of a measured value of the signal quality of the measured reference signal, a first preset signal quality threshold, and a comparison result between the measured value and the first preset signal quality threshold.

Optionally, the signal quality of the reference signal is obtained by measurement for determining whether to select an SDT mode, or the signal quality of the reference signal is obtained by measurement for selecting an uplink UL carrier;
where a first preset signal quality threshold corresponding to the reference signal measured for determining whether to select the SDT mode is different from or identical to a first preset signal quality threshold corresponding to the reference signal measured for selecting the uplink UL carrier.

Optionally, the signal quality includes at least one of a reference signal receiving power RSRP, a reference signal receiving quality RSRQ, or a signal to interference plus noise ratio SINR.

Optionally, the method further includes:
sending reporting information to the terminal device, to cause the terminal device to send relevant information corresponding to the reporting information to the network device.

Optionally, receiving the relevant information sent by the terminal device and generated in the process of determining the target transmission mode for the first transmission data according to the SDT configuration information includes:
receiving a first dedicated signaling sent by the terminal device including indication information that the relevant information is available;
sending a second dedicated signaling that is used to request the relevant information to the terminal device;
receiving a third dedicated signaling including the relevant information sent by the terminal device.

Optionally, before receiving the relevant information sent by the terminal device, the method further includes:
sending a transmission mode conversion instruction to the terminal device, where the transmission mode conversion instruction is used to instruct the terminal device to convert to a non-SDT mode.

The data transmission method provided by the present embodiment is a method corresponding to a network device side in the above method embodiments, and reference for its implementation and technical effect can be made to the above embodiments.

### Embodiment 8

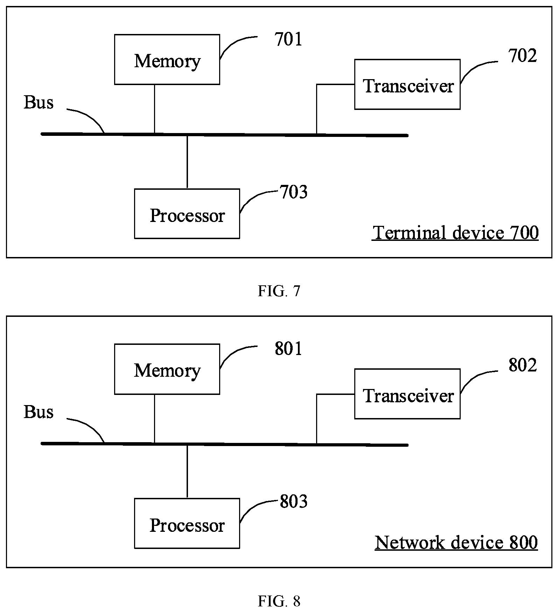

FIG. 7 is a structural diagram of a terminal device according to an embodiment of the present disclosure. A terminal device provided by the present embodiment can execute the processing flow provided by the method embodiments. As shown in FIG. 7, the terminal device 700 includes a memory 701, a transceiver 702 and a processor 703.

In FIG. 7, a bus architecture may include any number of interconnected buses and bridges, and specifically, various circuits of one or more processors represented by the processor 703 and a memory represented by the memory 701 are linked together. The bus architecture may also link various other circuits, such as a peripheral device, a voltage regulator, a power management circuit and the like, which are well known in the art, and thus not be further described here. A bus interface provides an interface. The transceiver 702 may be multiple elements, i.e., may include a transmitter and a receiver, and provide a unit for communication with various other apparatuses over transmission media. These transmission media include a wireless channel, a wired channel, an optical cable and other transmission media. The processor 703 is responsible for managing the bus architecture and general processing, and the memory 701 may store data used by the processor 703 during performing operations.

The processor 703 may be a central processing unit (CPU), an application specific integrated circuit (ASIC), a field-programmable gate array (FPGA) or a complex programmable logic device (CPLD), and the processor may also adopt a multi-core architecture.

The memory 701 is configured to store a computer program; the transceiver 702 is configured to transmit and receive data under a control of the processor 703; the processor 703 is configured to read the computer program in the memory 701 and execute the following operations:
for first transmission data, determining a target transmission mode of the first transmission data according to SDT configuration information, where the SDT configuration information is configured by a network device;
sending relevant information generated in a process of determining the target transmission mode for the first transmission data to the network device, where the relevant information is used to optimize the SDT configuration information.

Optionally, after determining the target transmission mode of the first transmission data, the processor 703 is further configured to:
store the relevant information generated in the process of determining the target transmission mode for the first transmission data.

The relevant information includes at least one or more of the following:
information related to a data volume of the first transmission data;
information related to a signal quality of a measured reference signal;
information related to the determined target transmission mode.

Optionally, if the determined target transmission mode is an SDT mode, the information related to the determined target transmission mode includes at least one or more of the following:
timing advance timer TAT information, where the TAT information includes at least one of a TA duration or whether timeout occurs;
indication information of whether a valid preconfigured resource exists;
information related to a signal quality of a synchronization signal block SSB associated with a preconfigured resource;
a transmission type for the SDT mode adopted, where the transmission type includes one of an SDT mode based on a preconfigured resource and an SDT mode based on an RA resource;
a cumulative number of SDT.

Optionally, if the determined target transmission mode is a non-SDT mode, the information related to the determined target transmission mode includes:
a reason for adopting the non-SDT mode.

Optionally, the reason for adopting the non-SDT mode includes at least one or more of the following:
the data volume of the first transmission data is greater than a preset data volume threshold;
a measured value of the signal quality of the reference signal is less than a first preset signal quality threshold;
a measured value of a signal quality of a synchronization signal block SSB associated with a preconfigured resource is less than a second preset signal quality threshold;
information on transmission failure for transmitting the first transmission data using an SDT mode;
a cumulative number of SDT exceeds a preset transmission number threshold;
a transmission mode conversion instruction is received, where the transmission mode conversion instruction is used to indicate a conversion to the non-SDT mode.

Optionally, the information related to the data volume of the first transmission data includes:
at least one or more of the data volume of the first transmission data, a preset data volume threshold, and a comparison result between the data volume of the first transmission data and the preset data volume threshold.

Optionally, the information related to the signal quality of the measured reference signal includes:
at least one or more of a measured value of the signal quality of the measured reference signal, a first preset signal quality threshold, and a comparison result between the measured value and the first preset signal quality threshold.

Optionally, the signal quality of the reference signal is obtained by measurement for determining whether to select an SDT mode, or the signal quality of the reference signal is obtained by measurement for selecting an uplink UL carrier;
where a first preset signal quality threshold corresponding to the reference signal measured for determining whether to select the SDT mode is different from or identical to a first preset signal quality threshold corresponding to the reference signal measured for selecting the uplink UL carrier.

Optionally, the signal quality includes at least one of a reference signal receiving power RSRP, a reference signal receiving quality RSRQ, or a signal to interference plus noise ratio SINR.

Optionally, when storing the relevant information generated in the process of determining the target transmission mode for the first transmission data, the processor 703 is specifically configured to:
for the first transmission data at different moments, store relevant information corresponding to the target transmission mode determined for the first transmission data respectively, where the relevant information is the relevant information generated in the process of determining the target transmission mode for the first transmission data.

Optionally, when sending the relevant information generated in the process of determining the target transmission mode for the first transmission data to the network device, the processor 703 is configured to:
generate an information report according to the relevant information generated in the process of determining the target transmission mode for the first transmission data, and send the information report to the network device.

Optionally, when sending the relevant information generated in the process of determining the target transmission mode for the first transmission data to the network device, the processor 703 is configured to:
write the relevant information into a first report; or, in a case of obtaining the relevant information, generate identification information of the relevant information, and write the identification information into a first report, where the identification information is used to obtain the relevant information corresponding to the identification information;
send the first report to the network device;
where the first report includes one or more of an RA report, a logged MDT measurement report, a CEF report and an RLF report.

Optionally, when sending the relevant information generated in the process of determining the target transmission mode for the first transmission data to the network device, the processor 703 is configured to:
send, according to preconfigured reporting information, the relevant information corresponding to the reporting information to the network device.

Optionally, when sending the relevant information generated in the process of determining the target transmission mode for the first transmission data to the network device, the processor 703 is configured to:
send, to the network device, a first dedicated signaling including indication information that the relevant information is available;
receive a second dedicated signaling that is used to request the relevant information sent by the network device;
send the relevant information to the network device in a third dedicated signaling.

The terminal device provided by the embodiment of the present disclosure can be specifically used to execute method embodiments of a terminal device side provided by the above embodiments, and the specific functions are not repeated here.

### Embodiment 9

FIG. 8 is a structural diagram of a network device according to an embodiment of the present disclosure. The network device provided by the present embodiment can execute a processing flow provided by the method embodiments. As shown in FIG. 8, the network device 800 includes a memory 801, a transceiver 802 and a processor 803.

In FIG. 8, a bus architecture may include any number of interconnected buses and bridges, and specifically, various circuits of one or more processors represented by the processor 803 and a memory represented by the memory 801 are linked together. The bus architecture may also link various other circuits, such as a peripheral device, a voltage regulator, a power management circuit and the like, which are well known in the art, and thus not be further described here. A bus interface provides an interface. The transceiver 802 may be multiple elements, i.e., may include a transmitter and a receiver, and provide a unit for communication with various other apparatuses over transmission media. These transmission media include a wireless channel, a wired channel, an optical cable and other transmission media. The processor 803 is responsible for managing the bus architecture and general processing, and the memory 801 may store data used by the processor 803 during performing operations.

The processor 803 may be a central processing unit (CPU), an application specific integrated circuit (ASIC), a field-programmable gate array (FPGA) or a complex programmable logic device (CPLD), and the processor may also adopt a multi-core architecture.

The memory 801 is configured to store a computer program; the transceiver 802 is configured to transmit and receive data under a control of the processor 803; the processor 803 is configured to read the computer program in the memory 801 and execute the following operations:
receiving relevant information sent by a terminal device, where the relevant information is generated by the terminal device in a process of determining a target transmission mode for first transmission data according to SDT configuration information;
optimizing the SDT configuration information configured for the terminal device according to the relevant information.

The relevant information includes at least one or more of the following:
information related to a data volume of the first transmission data;
information related to a signal quality of a measured reference signal;
information related to the determined target transmission mode.

Optionally, if the determined target transmission mode is an SDT mode, the information related to the determined target transmission mode includes at least one or more of the following:
timing advance timer TAT information, where the TAT information includes at least one of a TA duration or whether timeout occurs;
indication information of whether a valid preconfigured resource exists;
information related to a signal quality of a synchronization signal block SSB associated with a preconfigured resource;
a transmission type for the SDT mode adopted, where the transmission type includes one of an SDT mode based on a preconfigured resource and an SDT mode based on an RA resource;
a cumulative number of SDT.

Optionally, if the determined target transmission mode is a non-SDT mode, the information related to the determined target transmission mode includes:
a reason for adopting the non-SDT mode.

Optionally, the reason for adopting the non-SDT mode includes at least one or more of the following:
the data volume of the first transmission data is greater than a preset data volume threshold;
a measured value of the signal quality of the reference signal is less than a first preset signal quality threshold;
a measured value of a signal quality of a synchronization signal block SSB associated with a preconfigured resource is less than a second preset signal quality threshold;
information on transmission failure for transmitting the first transmission data using an SDT mode;
a cumulative number of SDT exceeds a preset transmission number threshold;
a transmission mode conversion instruction is received, where the transmission mode conversion instruction is used to indicate a conversion to the non-SDT mode.

Optionally, the information related to the data volume of the first transmission data includes:
at least one or more of the data volume of the first transmission data, a preset data volume threshold, and a comparison result between the data volume of the first transmission data and the preset data volume threshold.

Optionally, the information related to the signal quality of the measured reference signal includes:
at least one or more of a measured value of the signal quality of the measured reference signal, a first preset signal quality threshold, and a comparison result between the measured value and the first preset signal quality threshold.

Optionally, the signal quality of the reference signal is obtained by measurement for determining whether to select an SDT mode, or the signal quality of the reference signal is obtained by measurement for selecting an uplink UL carrier;
where a first preset signal quality threshold corresponding to the reference signal measured for determining whether to select the SDT mode is different from or identical to a first preset signal quality threshold corresponding to the reference signal measured for selecting the uplink UL carrier.

Optionally, the signal quality includes at least one of a reference signal receiving power RSRP, a reference signal receiving quality RSRQ, or a signal to interference plus noise ratio SINR.

Optionally, the processor 803 is further configured to:
send reporting information to the terminal device, to cause the terminal device to send relevant information corresponding to the reporting information to the network device.

Optionally, when receiving the relevant information sent by the terminal device and generated in the process of determining the target transmission mode for the first transmission data according to the SDT configuration information, the processor 803 is configured to:
receive a first dedicated signaling sent by the terminal device including indication information that the relevant information is available;
send a second dedicated signaling that is used to request the relevant information to the terminal device;
receive a third dedicated signaling including the relevant information sent by the terminal device.

The network device provided by the embodiment of the present disclosure can be specifically used to execute method embodiments of a network device side provided by the above embodiments, and the specific functions are not repeated here.

### Embodiment 10

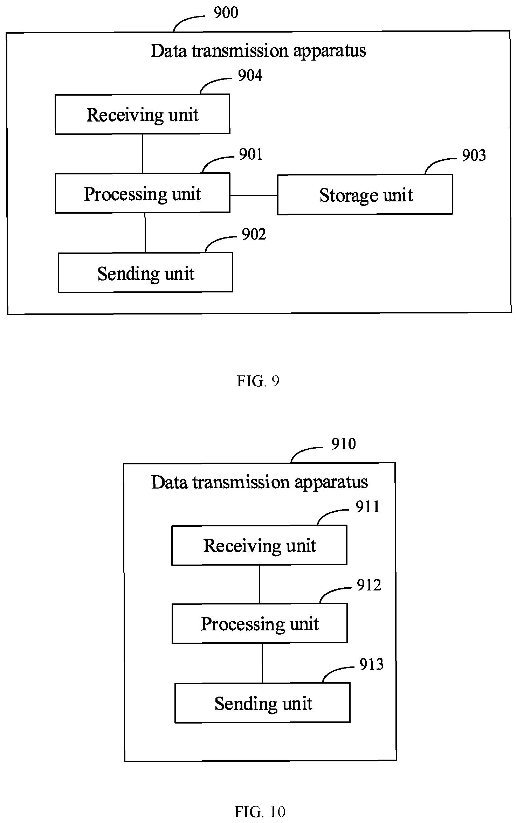

FIG. 9 is a structural diagram of a data transmission apparatus provided by an embodiment of the present disclosure. The data transmission apparatus provided by the present embodiment can execute the processing flow provided by method embodiments of a terminal device side. As shown in FIG. 9, the data transmission apparatus 900 includes a processing unit 901 and a sending unit 902.

The processing unit 901 is configured to, for first transmission data, determine a target transmission mode of the first transmission data according to SDT configuration information, where the SDT configuration information is configured by a network device;

The sending unit 902 is configured to send relevant information generated in a process of determining the target transmission mode for the first transmission data to the network device, where the relevant information is used to optimize the SDT configuration information.

Optionally, the data transmission apparatus 900 further includes a storage unit 903, and the storage unit 903 is configured to:
store the relevant information generated in the process of determining the target transmission mode for the first transmission data.

The relevant information includes at least one or more of the following:
information related to a data volume of the first transmission data;
information related to a signal quality of a measured reference signal;
information related to the determined target transmission mode.

Optionally, if the determined target transmission mode is an SDT mode, the information related to the determined target transmission mode includes at least one or more of the following:
timing advance timer TAT information, where the TAT information includes at least one of a TA duration or whether timeout occurs;
indication information of whether a valid preconfigured resource exists;
information related to a signal quality of a synchronization signal block SSB associated with a preconfigured resource;
a transmission type for the SDT mode adopted, where the transmission type includes one of an SDT mode based on a preconfigured resource and an SDT mode based on an RA resource;
a cumulative number of SDT.

Optionally, if the determined target transmission mode is a non-SDT mode, the information related to the determined target transmission mode includes:
a reason for adopting the non-SDT mode.

Optionally, the reason for adopting the non-SDT mode includes at least one or more of the following:
the data volume of the first transmission data is greater than a preset data volume threshold;
a measured value of the signal quality of the reference signal is less than a first preset signal quality threshold;
a measured value of a signal quality of a synchronization signal block SSB associated with a preconfigured resource is less than a second preset signal quality threshold;
information on transmission failure for transmitting the first transmission data using an SDT mode;
a cumulative number of SDT exceeds a preset transmission number threshold;
a transmission mode conversion instruction is received, where the transmission mode conversion instruction is used to indicate a conversion to the non-SDT mode.

Optionally, the information related to the data volume of the first transmission data includes:
at least one or more of the data volume of the first transmission data, a preset data volume threshold, and a comparison result between the data volume of the first transmission data and the preset data volume threshold.

Optionally, the information related to the signal quality of the measured reference signal includes:
at least one or more of a measured value of the signal quality of the measured reference signal, a first preset signal quality threshold, and a comparison result between the measured value and the first preset signal quality threshold.

Optionally, the signal quality of the reference signal is obtained by measurement for determining whether to select an SDT mode, or the signal quality of the reference signal is obtained by measurement for selecting an uplink UL carrier;
where a first preset signal quality threshold corresponding to the reference signal measured for determining whether to select the SDT mode is different from or identical to a first preset signal quality threshold corresponding to the reference signal measured for selecting the uplink UL carrier.

Optionally, the signal quality includes at least one of a reference signal receiving power RSRP, a reference signal receiving quality RSRQ, or a signal to interference plus noise ratio SINR.

Optionally, the storage unit 903, when storing the relevant information generated in the process of determining the target transmission mode for the first transmission data, is configured to:
for the first transmission data at different moments, store relevant information corresponding to the target transmission mode determined for the first transmission data respectively, where the relevant information is the relevant information generated in the process of determining the target transmission mode for the first transmission data.

Optionally, the sending unit 902, when sending the relevant information generated in the process of determining the target transmission mode for the first transmission data to the network device, is configured to:
generate an information report according to the relevant information generated in the process of determining the target transmission mode for the first transmission data, and send the information report to the network device.

Optionally, the sending unit 902, when sending the relevant information generated in the process of determining the target transmission mode for the first transmission data to the network device, is configured to:
write the relevant information into a first report; or, in a case of obtaining the relevant information, generate identification information of the relevant information, and write the identification information into a first report, where the identification information is used to obtain the relevant information corresponding to the identification information;
send the first report to the network device;
where the first report includes one or more of an RA report, a logged MDT measurement report, a CEF report and an RLF report.

Optionally, the sending unit 902, when sending the relevant information generated in the process of determining the target transmission mode for the first transmission data to the network device, is configured to:
send, according to preconfigured reporting information, the relevant information corresponding to the reporting information to the network device.

Optionally, when sending the relevant information generated in the process of determining the target transmission mode for the first transmission data to the network device, the sending unit 902 is configured to send, to the network device, a first dedicated signaling including indication information that the relevant information is available;
the data transmission apparatus 900 further includes a receiving unit 904, configured to receive a second dedicated signaling that is used to request the relevant information sent by the network device;
the sending unit 902 is further configured to send the relevant information to the network device in a third dedicated signaling.

The data transmission apparatus provided by the embodiment of the present disclosure can be specifically used to execute above method embodiments of a terminal device side, and the specific functions are not repeated here.

### Embodiment 11

FIG. 10 is a structural diagram of a data transmission apparatus provided by an embodiment of the present disclosure. The data transmission apparatus provided by the present embodiment can execute the processing flow provided by the method embodiments of a network device side. As shown in FIG. 10, the data transmission apparatus 910 includes a receiving unit 911 and a processing unit 912.

The receiving unit 911 is configured to receive relevant information sent by a terminal device, where the relevant information is generated by the terminal device in a process of determining a target transmission mode for first transmission data according to SDT configuration information;

The processing unit 912 is configured to optimize the SDT configuration information configured for the terminal device according to the relevant information.

Optionally, the data transmission apparatus 910 may further include a sending unit 913, configured to send the SDT configuration information to the terminal device.

The relevant information includes at least one or more of the following:
information related to a data volume of the first transmission data;
information related to a signal quality of a measured reference signal;
information related to the determined target transmission mode.

Optionally, if the determined target transmission mode is an SDT mode, the information related to the determined target transmission mode includes at least one or more of the following:
timing advance timer TAT information, where the TAT information includes at least one of a TA duration or whether timeout occurs;
indication information of whether a valid preconfigured resource exists;
information related to a signal quality of a synchronization signal block SSB associated with a preconfigured resource;
a transmission type for the SDT mode adopted, where the transmission type includes one of an SDT mode based on a preconfigured resource and an SDT mode based on an RA resource;
a cumulative number of SDT.

Optionally, if the determined target transmission mode is a non-SDT mode, the information related to the determined target transmission mode includes:
a reason for adopting the non-SDT mode.

Optionally, the reason for adopting the non-SDT mode includes at least one or more of the following:
the data volume of the first transmission data is greater than a preset data volume threshold;
a measured value of the signal quality of the reference signal is less than a first preset signal quality threshold;
a measured value of a signal quality of a synchronization signal block SSB associated with a preconfigured resource is less than a second preset signal quality threshold;
information on transmission failure for transmitting the first transmission data using an SDT mode;
a cumulative number of SDT exceeds a preset transmission number threshold;
a transmission mode conversion instruction is received, where the transmission mode conversion instruction is used to indicate a conversion to the non-SDT mode.

Optionally, the information related to the data volume of the first transmission data includes:
at least one or more of the data volume of the first transmission data, a preset data volume threshold, and a comparison result between the data volume of the first transmission data and the preset data volume threshold.

Optionally, the information related to the signal quality of the measured reference signal includes:
at least one or more of a measured value of the signal quality of the measured reference signal, a first preset signal quality threshold, and a comparison result between the measured value and the first preset signal quality threshold.

Optionally, the signal quality of the reference signal is obtained by measurement for determining whether to select an SDT mode, or the signal quality of the reference signal is obtained by measurement for selecting an uplink UL carrier;
where a first preset signal quality threshold corresponding to the reference signal measured for determining whether to select the SDT mode is different from or identical to a first preset signal quality threshold corresponding to the reference signal measured for selecting the uplink UL carrier.

Optionally, the signal quality includes at least one of a reference signal receiving power RSRP, a reference signal receiving quality RSRQ, or a signal to interference plus noise ratio SINR.

Optionally, the sending unit 913 is further configured to send reporting information to the terminal device, to cause the terminal device to send relevant information corresponding to the reporting information to the network device.

Optionally, the receiving unit 911 receiving the relevant information sent by the terminal device and generated in the process of determining the target transmission mode for the first transmission data according to the SDT configuration information, specifically includes the following process.

The receiving unit 911 is configured to receive a first dedicated signaling sent by the terminal device including indication information that the relevant information is available.

The sending unit 913 is configured to send a second dedicated signaling that is used to request the relevant information to the terminal device.

The receiving unit 911 is configured to receive a third dedicated signaling including the relevant information sent by the terminal device.

The data transmission apparatus provided by the embodiment of the present disclosure can be specifically used to execute above method embodiments of a network device side, and the specific functions are not repeated here.

It should be noted that a division of units in the embodiments of the present disclosure is schematic and is only a logical function division, and there may be other division manners in actual implementation. In addition, the functional units in the embodiments of the present disclosure may be integrated in one processing unit, or each unit may exist physically alone, or two or more units may be integrated in one unit. The above-mentioned integrated unit may be implemented in a form of hardware or a software functional unit

If implemented in the form of the software functional unit and sold or used as an independent product, the integrated unit may be stored in a processor-readable storage medium. Based on this understanding, a technical solution of the present disclosure essentially or a part thereof that contributes to the related art or all or part of the technical solution can be embodied in a form of a software product. The computer software product is stored in a storage medium and includes several instructions for making a computer device (which may be a personal computer, a server, or a network device, etc.) or a processor execute all or part of steps of the methods described in the embodiments of the present disclosure. The aforementioned storage medium includes: a U disk, a mobile hard disk, a read-only memory (ROM), a random access memory (RAM), a magnetic disk, an optical disk or other media that can store program codes.

It should be noted here that the above apparatus provided by the present disclosure can implement all the method steps implemented by the above method embodiments, and can achieve the same technical effects. The part of the present embodiment which is same as the method embodiments and the beneficial effects will not be repeated in detail here.

### Embodiment 12

Embodiment 12 of the present disclosure provides a computer-readable storage medium. The processor-readable storage medium stores a computer program, and the computer program is used to cause a processor to execute the data transmission method according to any one of the Embodiments 1-6.

The processor-readable storage medium may be any available medium or data storage device that the processor can access, including but not limited to, a magnetic memory (such as a floppy disk, a hard disk, a magnetic tape, a magneto-optical disk (MO)), an optical memory (such as a compact disc (CD), a digital video disc (DVD), a blu-ray disc (BD), a high-definition versatile disc (HVD), etc.), and a semiconductor memory (such as a ROM, an EPROM, an EEPROM, a non-volatile memory (NAND FLASH), a solid state disk (SSD)), etc.

### Embodiment 13

Embodiment 13 of the present disclosure provides a computer-readable storage medium. The processor-readable storage medium stores a computer program, and the computer program is used to cause a processor to execute the data transmission method according to Embodiment 7.

The processor-readable storage medium may be any available medium or data storage device that the processor can access, including but not limited to, a magnetic memory (such as a floppy disk, a hard disk, a magnetic tape, a magneto-optical disk (MO)), an optical memory (such as a CD, a DVD, a BD, a HVD, etc.), and a semiconductor memory (such as a ROM, an EPROM, an EEPROM, a non-volatile memory (NAND FLASH), a solid state disk (SSD)), etc.

It should be understood by those skilled in the art that the embodiments of the present disclosure can be provided as methods, systems or computer program products. Therefore, the present disclosure may take forms of entirely hardware embodiments, entirely software embodiments, or embodiments combining software and hardware aspects. Furthermore, the present disclosure may take a form of a computer program product implemented on one or more computer-usable storage medium (including but not limited to a disk storage, an optical storage, etc.) in which computer-usable program codes are included.

The present disclosure is described with reference to flowcharts and/or block diagrams of methods, devices (systems) and computer program products according to the embodiments of the present disclosure. It should be understood that each flow and/or block in the flowcharts and/or block diagrams, and a combination of flow and/or block in the flowcharts and/or block diagrams may be implemented by computer-executable instructions. These computer-executable instructions may be provided to a processor of a general-purpose computer, a special-purpose computer, an embedded processor or other programmable data processing devices to produce a machine, so that an apparatus for implementing functions specified in one or more flows of the flowcharts and/or one or more blocks of the block diagrams is produced by instructions executed by the processor of the computer or other programmable data processing devices.

These processor-executable instructions may also be stored in a processor-readable memory that can guide a computer or other programmable data processing devices to work in a specific way, so that the instructions stored in the processor-readable memory produce a manufactured product including an instruction apparatus, and the instruction apparatus implements functions specified in one or more flows of the flowcharts and/or one or more blocks of the block diagrams.

These processor-executable instructions may also be loaded on a computer or other programmable data processing devices, so that a series of operation steps are executed on the computer or other programmable devices to produce computer-implemented processing, thereby the instructions executed on the computer or other programmable devices provide steps for implementing functions specified in one or more flows of the flowcharts and/or one or more blocks of the block diagrams.

## Claims

1. A data transmission method, applied to a terminal device, comprising:
determining (S201, S301, S401) a target transmission mode of first transmission data according to small data transmission, SDT, configuration information, wherein the SDT configuration information is configured by a network device, and the determined target transmission mode is an SDT mode or a non-SDT mode;
sending (S203, S302) relevant information generated in a process of determining the target transmission mode for the first transmission data to the network device;
wherein the relevant information is used to optimize the SDT configuration information;
wherein the relevant information comprises at least one or more of the following:
information related to a data volume of the first transmission data;
information related to a signal quality of a measured reference signal;
information related to the determined target transmission mode.

2. The method according to claim 1, wherein after determining (S201, S301, S401) the target transmission mode of the first transmission data, the method further comprises:
storing (S202, S402) the relevant information generated in the process of determining the target transmission mode for the first transmission data.

3. The method according to claim 1, wherein if the determined target transmission mode is the SDT mode, the information related to the determined target transmission mode comprises at least one or more of the following:
timing advance timer, TAT, information;
indication information of whether a valid preconfigured resource exists;
information related to a signal quality of a synchronization signal block, SSB, associated with a preconfigured resource;
a transmission type for the SDT mode adopted, wherein the transmission type comprises one of an SDT mode based on a preconfigured resource and an SDT mode based on a random access, RA, resource;
a cumulative number of SDT;
and/or,
if the determined target transmission mode is the non-SDT mode, the information related to the determined target transmission mode comprises:
a reason for adopting the non-SDT mode.

4. The method according to claim 3, wherein the reason for adopting the non-SDT mode comprises at least one or more of the following:
the data volume of the first transmission data is greater than a preset data volume threshold;
a measured value of the signal quality of the reference signal is less than a first preset signal quality threshold;
a measured value of a signal quality of a synchronization signal block SSB associated with a preconfigured resource is less than a second preset signal quality threshold;
information on transmission failure for transmitting the first transmission data using an SDT mode;
a cumulative number of SDT exceeds a preset transmission number threshold;
a transmission mode conversion instruction is received, wherein the transmission mode conversion instruction is used to indicate a conversion to the non-SDT mode.

5. The method according to any one of claims 1, 3, 4, wherein the information related to the data volume of the first transmission data comprises at least one or more of the following:
the data volume of the first transmission data, a preset data volume threshold, and a comparison result between the data volume of the first transmission data and the preset data volume threshold;
and/or, the information related to the signal quality of the measured reference signal comprises at least one or more of the following:
a measured value of the signal quality of the measured reference signal, a first preset signal quality threshold, and a comparison result between the measured value and the first preset signal quality threshold.

6. The method according to claim 5, wherein the signal quality of the reference signal is obtained by measurement for determining whether to select the SDT mode, or the signal quality of the reference signal is obtained by measurement for selecting an uplink, UL, carri er;
wherein a first preset signal quality threshold corresponding to the reference signal measured for determining whether to select the SDT mode is different from or identical to a first preset signal quality threshold corresponding to the reference signal measured for selecting the uplink, UL, carrier.

7. The method according to claim 2, wherein storing (S202, S402) the relevant information generated in the process of determining the target transmission mode for the first transmission data comprises:
storing relevant information corresponding to the target transmission mode determined for every first transmission data respectively, wherein the relevant information is information generated in the process of determining the target transmission mode for the first transmission data, and every first transmission data corresponds to different moments.

8. The method according to any one of claims 1-7, wherein sending (S203, S302) the relevant information generated in the process of determining the target transmission mode for the first transmission data to the network device comprises at least one of the following:
(i) generating an information report according to the relevant information generated in the process of determining the target transmission mode for the first transmission data, and sending the information report to the network device; or,
(ii) writing the relevant information into a first report; or, in a case of obtaining the relevant information, generating identification information of the relevant information, and writing the identification information into a first report, wherein the identification information is used to obtain the relevant information corresponding to the identification information;
sending the first report to the network device;
wherein the first report comprises one or more of an RA report, a logged minimization of drive tests, MDT, measurement report, a connection establishment failure, CEF, report and a radio link failure RLF report; or,
(iii) sending, according to preconfigured reporting information, the relevant information corresponding to the reporting information to the network device; or,
(iv) sending (S501), to the network device, a first dedicated signaling comprising indication information that the relevant information is available;
receiving (S502) a second dedicated signaling that is used to request the relevant information sent by the network device;
sending (S503) the relevant information to the network device in a third dedicated signaling.

9. A data transmission method, applied to a network device, comprising:
receiving (S601) relevant information sent by a terminal device, wherein the relevant information is generated by the terminal device in a process of determining a target transmission mode for first transmission data according to SDT configuration information configured by the network device, and the determined target transmission mode is an SDT mode or a non-SDT mode;
optimizing (S602) the SDT configuration information configured for the terminal device according to the relevant information;
wherein the relevant information comprises at least one or more of the following:
information related to a data volume of the first transmission data;
information related to a signal quality of a measured reference signal;
information related to the determined target transmission mode.

10. A data transmission apparatus (900), applied to a terminal device, comprising:
a processing unit (901), configured to determine a target transmission mode of first transmission data according to SDT configuration information, wherein the SDT configuration information is configured by a network device, and the determined target transmission mode is an SDT mode or a non-SDT mode;
a sending unit (902), configured to send relevant information generated in a process of determining the target transmission mode for the first transmission data to the network device;
wherein the relevant information is used to optimize the SDT configuration information;
wherein the relevant information comprises at least one or more of the following:
information related to a data volume of the first transmission data;
information related to a signal quality of a measured reference signal;
information related to the determined target transmission mode.

11. The apparatus (900) according to claim 10, wherein the processing unit (901) is further configured to:
store the relevant information generated in the process of determining the target transmission mode for the first transmission data.

12. The apparatus (900) according to claim 10 or 11, wherein the processing unit (901) is specifically configured to execute at least one of the following operations:
(i) generating an information report according to the relevant information generated in the process of determining the target transmission mode for the first transmission data, and sending the information report to the network device; or,
(ii) writing the relevant information into a first report; or, in a case of obtaining the relevant information, generating identification information of the relevant information, and writing the identification information into a first report, wherein the identification information is used to obtain the relevant information corresponding to the identification information;
sending the first report to the network device;
wherein the first report comprises one or more of an RA report, a logged minimization of drive tests, MDT, measurement report, a connection establishment failure, CEF, report and a radio link failure RLF report; or,
(iii) sending, according to preconfigured reporting information, the relevant information corresponding to the reporting information to the network device; or,
(iv) sending, to the network device, a first dedicated signaling comprising indication information that the relevant information is available;
receiving a second dedicated signaling that is used to request the relevant information sent by the network device;
sending the relevant information to the network device in a third dedicated signaling.

13. A data transmission apparatus (910), applied to a network device, comprising:
a receiving unit (911), configured to receive relevant information sent by a terminal device, wherein the relevant information is generated by the terminal device in a process of determining a target transmission mode for first transmission data according to SDT configuration information configured by the network device, and the determined target transmission mode is an SDT mode or a non-SDT mode;
a processing unit (912), configured to optimize the SDT configuration information configured for the terminal according to the relevant information;
wherein the relevant information comprises at least one or more of the following:
information related to a data volume of the first transmission data;
information related to a signal quality of a measured reference signal;
information related to the determined target transmission mode.

## Patentansprüche

1. Datenübertragungsverfahren, das auf eine Endgerätevorrichtung angewendet wird, umfassend:
Bestimmen (S201, S301, S401) eines Zielübertragungsmodus erster Übertragungsdaten gemäß Kleindatenübertragungs(SDT)-Konfigurationsinformationen, wobei die SDT-Konfigurationsinformationen durch eine Netzwerkvorrichtung konfiguriert werden und der bestimmte Zielübertragungsmodus ein SDT-Modus oder ein Nicht-SDT-Modus ist;
Senden (S203, S302) in einem Prozess des Bestimmens des Zielübertragungsmodus für die ersten Übertragungsdaten generierter relevanter Informationen an die Netzwerkvorrichtung,
wobei die relevanten Informationen zur Optimierung der SDT-Konfigurationsinformationen verwendet werden,
wobei die relevanten Informationen mindestens eine oder mehrere der folgenden Informationen umfassen:
Informationen bezüglich eines Datenvolumens der ersten Übertragungsdaten;
Informationen bezüglich einer Signalqualität eines gemessenen Referenzsignals;
Informationen bezüglich des bestimmten Zielübertragungsmodus.

2. Verfahren nach Anspruch 1, wobei das Verfahren nach dem Bestimmen (S201, S301, S401) des Zielübertragungsmodus der ersten Übertragungsdaten ferner Folgendes umfasst:
Speichern (S202, S402) der in dem Prozess des Bestimmens des Zielübertragungsmodus für die ersten Übertragungsdaten generierten relevanten Informationen.

3. Verfahren nach Anspruch 1, wobei, falls der bestimmte Zielübertragungsmodus der SDT-Modus ist, die Informationen bezüglich des bestimmten Zielübertragungsmodus mindestens eine oder mehrere der folgenden Angaben umfassen:
Zeitvorlaufszeitgeber(TAT)-Informationen;
Angabeinformationen darüber, ob eine gültige vorkonfigurierte Ressource vorhanden ist;
Informationen bezüglich einer Signalqualität eines Synchronisationssignalblocks, SSB, der mit einer vorkonfigurierten Ressource verknüpft ist;
einen Übertragungstyp für den eingesetzten SDT-Modus, wobei der Übertragungstyp entweder einen auf einer vorkonfigurierten Ressource basierenden SDT-Modus oder einen auf einer Direktzugriffs (RA) - Ressource basierenden SDT-Modus umfasst;
eine kumulative SDT-Anzahl,
und/oder die Informationen bezüglich des bestimmten Zielübertragungsmodus, falls der bestimmte Zielübertragungsmodus der Nicht-SDT-Modus ist, Folgendes umfassen: einen Grund für den Einsatz des Nicht-SDT-Modus.

4. Verfahren nach Anspruch 3, wobei der Grund für den Einsatz des Nicht-SDT-Modus mindestens eine oder mehrere der folgenden Bedingungen umfasst:
das Datenvolumen der ersten Übertragungsdaten ist größer als ein voreingestellter Datenvolumenschwellenwert;
ein gemessener Wert der Signalqualität des Referenzsignals ist kleiner als ein erster voreingestellter Signalqualitätsschwellenwert;
ein gemessener Wert einer Signalqualität eines Synchronisationssignalblocks SSB, der mit einer vorkonfigurierten Ressource verknüpft ist, ist kleiner als ein zweiter voreingestellter Signalqualitätsschwellenwert;
Informationen über einen Übertragungsfehler bei der Übertragung der ersten Übertragungsdaten unter Verwendung eines SDT-Modus;
eine kumulative SDT-Anzahl überschreitet einen voreingestellten Übertragungsanzahlschwellenwert;
eine Übertragungsmoduswechselanweisung wird empfangen, wobei die Übertragungsmoduswechselanweisung verwendet wird, um einen Wechsel zu dem Nicht-SDT-Modus anzugeben.

5. Verfahren nach einem der Ansprüche 1, 3 oder 4, wobei die Informationen bezüglich des Datenvolumens der ersten Übertragungsdaten mindestens eine oder mehrere der folgenden Angaben umfassen:
das Datenvolumen der ersten Übertragungsdaten, einen voreingestellten Datenvolumenschwellenwert und ein Vergleichsergebnis zwischen dem Datenvolumen der ersten Übertragungsdaten und dem voreingestellten Datenvolumenschwellenwert,
und/oder die Informationen bezüglich der Signalqualität des gemessenen Referenzsignals mindestens eine oder mehrere der folgenden Angaben umfassen:
einen gemessenen Wert der Signalqualität des gemessenen Referenzsignals, einen ersten voreingestellten Signalqualitätsschwellenwert und ein Vergleichsergebnis zwischen dem gemessenen Wert und dem ersten voreingestellten Signalqualitätsschwellenwert.

6. Verfahren nach Anspruch 5, wobei die Signalqualität durch Messung erhalten wird, um zu bestimmen, ob der SDT-Modus auszuwählen ist, oder die Signalqualität des Referenzsignals durch Messung erhalten wird, um einen Uplink(UL)-Träger auszuwählen,
wobei sich ein erster voreingestellter Signalqualitätsschwellenwert entsprechend dem zum Bestimmen, ob der SDT-Modus auszuwählen ist, gemessenen Referenzsignal von einem ersten voreingestellten Signalqualitätsschwellenwert entsprechend dem zum Auswählen des Uplink(UL)-Trägers gemessenen Referenzsignal unterscheidet oder mit diesem identisch ist.

7. Verfahren nach Anspruch 2, wobei das Speichern (S202, S402) der in dem Prozess des Bestimmens des Zielübertragungsmodus für die ersten Übertragungsdaten generierten relevanten Informationen Folgendes umfasst:
Speichern relevanter Informationen entsprechend dem jeweils für jede erste Übertragungsdatenmenge bestimmten Zielübertragungsmodus, wobei die relevanten Informationen in dem Prozess des Bestimmens des Zielübertragungsmodus für die ersten Übertragungsdaten generierte Informationen sind und jede erste Übertragungsdatenmenge unterschiedlichen Zeitpunkten entspricht.

8. Verfahren nach einem der Ansprüche 1-7, wobei das Senden (S203, S302) der in dem Prozess des Bestimmens des Zielübertragungsmodus für die ersten Übertragungsdaten generierten relevanten Informationen an die Netzwerkvorrichtung mindestens einen der folgenden Schritte umfasst:
(i) Generieren eines Informationsberichts gemäß den in dem Prozess des Bestimmens des Zielübertragungsmodus für die ersten Übertragungsdaten generierten relevanten Informationen und Senden des Informationsberichts an die Netzwerkvorrichtung oder
(ii) Vermerken der relevanten Informationen in dem ersten Bericht oder im Falle des Erhaltens der relevanten Informationen Generieren von Identifikationsinformationen der relevanten Informationen und Vermerken der Identifikationsinformationen in einem ersten Bericht, wobei die Identifikationsinformationen verwendet werden, um die relevanten Informationen entsprechend den Identifikationsinformationen zu erhalten;
Senden des ersten Berichts an die Netzwerkvorrichtung,
wobei der erste Bericht einen oder mehrere der folgenden Berichte umfasst: einen RA-Bericht, einen Messbericht über die protokollierte Minimierung von Fahrtests, MDT, einen Verbindungsaufbaufehler(CEF)-Bericht und einen Funkverbindungsfehler(RLF)-Bericht, oder
(iii) Senden, gemäß vorkonfigurierter Berichtsinformationen, der relevanten Informationen entsprechend den Berichtsinformationen an die Netzwerkvorrichtung oder
(iv) Senden (S501) einer ersten dedizierten Signalisierung, umfassend Angabeinformationen darüber, dass die relevanten Informationen verfügbar sind, an die Netzwerkvorrichtung;
Empfangen (S502) einer zweiten dedizierten Signalisierung, die verwendet wird, um die durch die Netzwerkvorrichtung gesendeten relevanten Informationen anzufordern;
Senden (S503) der relevanten Informationen an die Netzwerkvorrichtung in einer dritten dedizierten Signalisierung.

9. Datenübertragungsverfahren, das auf eine Netzwerkvorrichtung angewendet wird, umfassend:
Empfangen (S601) durch eine Endgerätevorrichtung gesendeter relevanter Informationen, wobei die relevanten Informationen durch die Endgerätevorrichtung in einem Prozess des Bestimmens eines Zielübertragungsmodus für erste Übertragungsdaten gemäß durch die Netzwerkvorrichtung konfigurierten SDT-Konfigurationsinformationen generiert werden und der bestimmte Zielübertragungsmodus ein SDT-Modus oder ein Nicht-SDT-Modus ist;
Optimieren (S602) der für die Endgerätevorrichtung konfigurierten SDT-Informationen gemäß den relevanten Informationen,
wobei die relevanten Informationen mindestens eine oder mehrere der folgenden Informationen umfassen:
Informationen bezüglich eines Datenvolumens der ersten Übertragungsdaten;
Informationen bezüglich einer Signalqualität eines gemessenen Referenzsignals;
Informationen bezüglich des bestimmten Zielübertragungsmodus.

10. Datenübertragungseinrichtung (900), die auf eine Endgerätevorrichtung angewendet wird, umfassend:
eine Verarbeitungseinheit (901), die zum Bestimmen eines Zielübertragungsmodus erster Übertragungsdaten gemäß SDT-Konfigurationsinformationen konfiguriert ist, wobei die SDT-Konfigurationsinformationen durch eine Netzwerkvorrichtung konfiguriert werden und der bestimmte Zielübertragungsmodus ein SDT-Modus oder ein Nicht-SDT-Modus ist;
eine Sendeeinheit (902), die zum Senden in einem Prozess des Bestimmens des Zielübertragungsmodus für die ersten Übertragungsdaten generierter relevanter Informationen an die Netzwerkvorrichtung konfiguriert ist,
wobei die relevanten Informationen zur Optimierung der SDT-Konfigurationsinformationen verwendet werden,
wobei die relevanten Informationen mindestens eine oder mehrere der folgenden Informationen umfassen:
Informationen bezüglich eines Datenvolumens der ersten Übertragungsdaten;
Informationen bezüglich einer Signalqualität eines gemessenen Referenzsignals;
Informationen bezüglich des bestimmten Zielübertragungsmodus.

11. Einrichtung (900) nach Anspruch 10, wobei die Verarbeitungseinheit (901) ferner zu Folgendem konfiguriert ist:
Speichern der in dem Prozess des Bestimmens des Zielübertragungsmodus für die ersten Übertragungsdaten generierten relevanten Informationen.

12. Einrichtung (900) nach Anspruch 10 oder 11, wobei die Verarbeitungseinheit (901) konfiguriert ist, um mindestens einen der folgenden Vorgänge durchzuführen:
(i) Generieren eines Informationsberichts gemäß den in dem Prozess des Bestimmens des Zielübertragungsmodus für die ersten Übertragungsdaten generierten relevanten Informationen und Senden des Informationsberichts an die Netzwerkvorrichtung oder
(ii) Vermerken der relevanten Informationen in dem ersten Bericht oder im Falle des Erhaltens der relevanten Informationen Generieren von Identifikationsinformationen der relevanten Informationen und Vermerken der Identifikationsinformationen in einem ersten Bericht, wobei die Identifikationsinformationen verwendet werden, um die relevanten Informationen entsprechend den Identifikationsinformationen zu erhalten;
Senden des ersten Berichts an die Netzwerkvorrichtung,
wobei der erste Bericht einen oder mehrere der folgenden Berichte umfasst: einen RA-Bericht, einen Messbericht über die protokollierte Minimierung von Fahrtests, MDT, einen Verbindungsaufbaufehler(CEF)-Bericht und einen Funkverbindungsfehler(RLF)-Bericht, oder
(iii) Senden, gemäß vorkonfigurierter Berichtsinformationen, der relevanten Informationen entsprechend den Berichtsinformationen an die Netzwerkvorrichtung oder
(iv) Senden einer ersten dedizierten Signalisierung, umfassend Angabeinformationen darüber, dass die relevanten Informationen verfügbar sind, an die Netzwerkvorrichtung;
Empfangen einer zweiten dedizierten Signalisierung, die verwendet wird, um die durch die Netzwerkvorrichtung gesendeten relevanten Informationen anzufordern;
Senden der relevanten Informationen an die Netzwerkvorrichtung in einer dritten dedizierten Signalisierung.

13. Datenübertragungseinrichtung (910), die auf eine Netzwerkvorrichtung angewendet wird, umfassend:
eine Empfangseinheit (911), die zum Empfangen durch eine Endgerätevorrichtung gesendeter relevanter Informationen konfiguriert ist, wobei die relevanten Informationen durch die Endgerätevorrichtung in einem Prozess des Bestimmens eines Zielübertragungsmodus für erste Übertragungsdaten gemäß durch die Netzwerkvorrichtung konfigurierten SDT-Konfigurationsinformationen generiert werden und der bestimmte Zielübertragungsmodus ein SDT-Modus oder ein Nicht-SDT-Modus ist;
eine Verarbeitungseinheit (912), die zum Optimieren der für die Endgerätevorrichtung konfigurierten SDT-Informationen gemäß den relevanten Informationen konfiguriert ist,
wobei die relevanten Informationen mindestens eine oder mehrere der folgenden Informationen umfassen:
Informationen bezüglich eines Datenvolumens der ersten Übertragungsdaten;
Informationen bezüglich einer Signalqualität eines gemessenen Referenzsignals;
Informationen bezüglich des bestimmten Zielübertragungsmodus.

## Revendications

1. Procédé de transmission de données, appliqué à un dispositif terminal, comprenant :
la détermination (S201, S301, S401) d'un mode de transmission cible de premières données de transmission selon des informations de configuration de transmission de petites données, SDT, dans lequel les informations de configuration SDT sont configurées par un dispositif réseau, et le mode de transmission cible déterminé est un mode SDT ou un mode non SDT ;
l'envoi (S203, S302) d'informations pertinentes générées pendant un processus de détermination du mode de transmission cible pour les premières données de transmission au dispositif réseau ;
dans lequel les informations pertinentes sont utilisées pour optimiser les informations de configuration SDT ;
dans lequel les informations pertinentes comprennent au moins l'un ou plusieurs des éléments suivants :
des informations relatives à un volume de données des premières données de transmission ;
des informations relatives à une qualité de signal d'un signal de référence mesuré ;
des informations relatives au mode de transmission cible déterminé.

2. Procédé selon la revendication 1, dans lequel, après la détermination (S201, S301, S401) du mode de transmission cible des premières données de transmission, le procédé comprend en outre :
le stockage (S202, S402) des informations pertinentes générées pendant le processus de détermination du mode de transmission cible pour les premières données de transmission.

3. Procédé selon la revendication 1, dans lequel, si le mode de transmission cible déterminé est le mode SDT, les informations relatives au mode de transmission cible déterminé comprennent au moins l'un ou plusieurs des éléments suivants :
des informations de temporisateur d'avance de temporisation, TAT ;
des informations d'indication quant à savoir si une ressource préconfigurée valide existe ;
des informations relatives à une qualité de signal d'un bloc de signal de synchronisation, SSB, associé à une ressource préconfigurée ;
un type de transmission pour le mode SDT adopté, dans lequel le type de transmission comprend l'un parmi un mode SDT basé sur une ressource préconfigurée et un mode SDT basé sur une ressource d'accès aléatoire, RA ;
un nombre cumulé de SDT ;
et/ou, si le mode de transmission cible déterminé est le mode non SDT, les informations relatives au mode de transmission cible déterminé comprennent : une raison de l'adoption du mode non SDT.

4. Procédé selon la revendication 3, dans lequel la raison de l'adoption du mode non SDT comprend au moins l'un ou plusieurs des éléments suivants :
le volume de données des premières données de transmission est supérieur à un seuil de volume de données prédéfini ;
une valeur mesurée de la qualité de signal du signal de référence est inférieure à un premier seuil de qualité de signal prédéfini ;
une valeur mesurée d'une qualité de signal d'un bloc de signal de synchronisation SSB associé à une ressource préconfigurée est inférieure à un deuxième seuil de qualité de signal prédéfini ;
des informations sur un échec de transmission pour la transmission des premières données de transmission en utilisant un mode SDT ;
un nombre cumulé de SDT dépasse un seuil de nombre de transmissions prédéfini ;
une instruction de conversion de mode de transmission est reçue, dans lequel l'instruction de conversion de mode de transmission est utilisée pour indiquer une conversion vers le mode non SDT.

5. Procédé selon l'une quelconque des revendications 1, 3, 4, dans lequel les informations relatives au volume de données des premières données de transmission comprennent au moins l'un ou plusieurs des éléments suivants :
le volume de données des premières données de transmission, un seuil de volume de données prédéfini, et un résultat de comparaison entre le volume de données des premières données de transmission et le seuil de volume de données prédéfini ;
et/ou, les informations relatives à la qualité de signal du signal de référence mesuré comprennent au moins l'un ou plusieurs des éléments suivants :
une valeur mesurée de la qualité de signal du signal de référence mesuré, un premier seuil de qualité de signal prédéfini, et un résultat de comparaison entre la valeur mesurée et le premier seuil de qualité de signal prédéfini.

6. Procédé selon la revendication 5, dans lequel la qualité de signal du signal de référence est obtenue par une mesure pour la détermination quant à savoir s'il faut sélectionner le mode SDT, ou la qualité de signal du signal de référence est obtenue par une mesure pour la sélection d'une porteuse de liaison montante, UL ;
dans lequel un premier seuil de qualité de signal prédéfini correspondant au signal de référence mesuré pour la détermination quant à savoir s'il faut sélectionner le mode SDT est identique à ou différent d'un premier seuil de qualité de signal prédéfini correspondant au signal de référence mesuré pour la sélection de la porteuse de liaison montante, UL.

7. Procédé selon la revendication 2, dans lequel le stockage (S202, S402) des informations pertinentes générées pendant le processus de détermination du mode de transmission cible pour les premières données de transmission comprend :
le stockage d'informations pertinentes correspondant au mode de transmission cible déterminé pour chacune des premières données de transmission respectivement, dans lequel les informations pertinentes sont des informations générées pendant le processus de détermination du mode de transmission cible pour les premières données de transmission, et chacune des premières données de transmission correspond à des moments différents.

8. Procédé selon l'une quelconque des revendications 1 à 7, dans lequel l'envoi (S203, S302) des informations pertinentes générées pendant le processus de détermination du mode de transmission cible pour les premières données de transmission au dispositif réseau comprend au moins l'un parmi ce qui suit :
(i) la génération d'un rapport d'informations selon les informations pertinentes générées pendant le processus de détermination du mode de transmission cible pour les premières données de transmission, et l'envoi du rapport d'informations au dispositif réseau ; ou,
(ii) l'écriture des informations pertinentes dans un premier rapport ; ou, dans le cas de l'obtention des informations pertinentes, la génération d'informations d'identification des informations pertinentes, et l'écriture des informations d'identification dans un premier rapport, dans lequel les informations d'identification sont utilisées pour obtenir les informations pertinentes correspondant aux informations d'identification ;
l'envoi du premier rapport au dispositif réseau ;
dans lequel le premier rapport comprend un ou plusieurs rapports parmi un rapport RA, un rapport de mesure de minimisation de tests de conduite, MDT, enregistré, un rapport d'échec d'établissement de connexion, CEF, et un rapport d'échec de liaison radio, RLF ; ou,
(iii) l'envoi, selon des informations de rapport préconfigurées, des informations pertinentes correspondant aux informations de rapport au dispositif réseau ; ou,
(iv) l'envoi (S501), au dispositif réseau, d'une première signalisation dédiée comprenant des informations d'indication selon lesquelles les informations pertinentes sont disponibles ;
la réception (S502) d'une deuxième signalisation dédiée qui est utilisée pour demander les informations pertinentes envoyées par le dispositif réseau ;
l'envoi (S503) des informations pertinentes au dispositif réseau dans une troisième signalisation dédiée.

9. Procédé de transmission de données, appliqué à un dispositif réseau, comprenant :
la réception (S601) d'informations pertinentes envoyées par un dispositif terminal, dans lequel les informations pertinentes sont générées par le dispositif terminal pendant un processus de détermination d'un mode de transmission cible pour des premières données de transmission conformément à des informations de configuration SDT configurées par le dispositif réseau, et le mode de transmission cible déterminé est un mode SDT ou un mode non SDT ;
l'optimisation (S602) des informations de configuration SDT configurées pour le dispositif terminal selon les informations pertinentes ;
dans lequel les informations pertinentes comprennent au moins l'un ou plusieurs des éléments suivants :
des informations relatives à un volume de données des premières données de transmission ;
des informations relatives à une qualité de signal d'un signal de référence mesuré ;
des informations relatives au mode de transmission cible déterminé.

10. Appareil de transmission de données (900), appliqué à un dispositif terminal, comprenant :
une unité de traitement (901), configurée pour déterminer un mode de transmission cible de premières données de transmission selon des informations de configuration SDT, dans lequel les informations de configuration SDT sont configurées par un dispositif réseau, et le mode de transmission cible déterminé est un mode SDT ou un mode non SDT ;
une unité d'envoi (902), configurée pour envoyer des informations pertinentes générées pendant un processus de détermination du mode de transmission cible pour les premières données de transmission au dispositif réseau ;
dans lequel les informations pertinentes sont utilisées pour optimiser les informations de configuration SDT ;
dans lequel les informations pertinentes comprennent au moins l'un ou plusieurs des éléments suivants :
des informations relatives à un volume de données des premières données de transmission ;
des informations relatives à une qualité de signal d'un signal de référence mesuré ;
des informations relatives au mode de transmission cible déterminé.

11. Appareil (900) selon la revendication 10, dans lequel l'unité de traitement (901) est en outre configurée pour :
stocker les informations pertinentes générées pendant le processus de détermination du mode de transmission cible pour les premières données de transmission.

12. Appareil (900) selon la revendication 10 ou 11, dans lequel l'unité de traitement (901) est spécifiquement configurée pour exécuter au moins l'une des opérations suivantes :
(i) la génération d'un rapport d'informations selon les informations pertinentes générées pendant le processus de détermination du mode de transmission cible pour les premières données de transmission, et l'envoi du rapport d'informations au dispositif réseau ; ou,
(ii) l'écriture des informations pertinentes dans un premier rapport ; ou, dans le cas de l'obtention des informations pertinentes, la génération d'informations d'identification des informations pertinentes, et l'écriture des informations d'identification dans un premier rapport, dans lequel les informations d'identification sont utilisées pour obtenir les informations pertinentes correspondant aux informations d'identification ;
l'envoi du premier rapport au dispositif réseau ;
dans lequel le premier rapport comprend un ou plusieurs rapports parmi un rapport RA, un rapport de mesure de minimisation de tests de conduite, MDT, enregistré, un rapport d'échec d'établissement de connexion, CEF, et un rapport d'échec de liaison radio, RLF ; ou,
(iii) l'envoi, selon des informations de rapport préconfigurées, des informations pertinentes correspondant aux informations de rapport au dispositif réseau ; ou,
(iv) l'envoi, au dispositif réseau, d'une première signalisation dédiée comprenant des informations d'indication selon lesquelles les informations pertinentes sont disponibles ;
la réception d'une deuxième signalisation dédiée qui est utilisée pour demander les informations pertinentes envoyées par le dispositif réseau ;
l'envoi des informations pertinentes au dispositif réseau dans une troisième signalisation dédiée.

13. Appareil de transmission de données (910), appliqué à un dispositif réseau, comprenant :
une unité de réception (911), configurée pour recevoir des informations pertinentes envoyées par un dispositif terminal, dans lequel les informations pertinentes sont générées par le dispositif terminal pendant un processus de détermination d'un mode de transmission cible pour des premières données de transmission conformément à des informations de configuration SDT configurées par le dispositif réseau, et le mode de transmission cible déterminé est un mode SDT ou un mode non SDT ;
une unité de traitement (912), configurée pour optimiser les informations de configuration SDT configurées pour le terminal selon les informations pertinentes ;
dans lequel les informations pertinentes comprennent au moins l'un ou plusieurs des éléments suivants :
des informations relatives à un volume de données des premières données de transmission ;
des informations relatives à une qualité de signal d'un signal de référence mesuré ;
des informations relatives au mode de transmission cible déterminé.
